# EUROPEAN PATENT SPECIFICATION

(11) **EP 2 418 869 B1**
(45) Date of publication and mention of the grant of the patent: **01.10.2014**
(21) Application number: 11176105.2
(22) Date of filing: 01.08.2011
(51) Int. Cl.: H04N 21/8358, H04N 21/845

(54) **Information processing apparatus, information processing method, and computer program for marking audio-video data.**
Informationsverarbeitungsvorrichtung, Informationsverarbeitungsverfahren und Computerprogramm zum Markieren von Audio-/Videodaten.
Appareil de traitement d'informations, procédé et programme informatique de traitement d'informations pour le marquage de données audiovisuelles.

(30) Priority: 09.08.2010 JP 2010178426
(43) Date of publication of application: 15.02.2012
(73) Proprietor: Sony Corporation, Tokyo 108-0075 (JP)
(72) Inventor: Kuno, Hiroshi, Minato-ku, Tokyo 108-0075 (JP); Tanabe, Mitsuru, Minato-ku, Tokyo 108-0075 (JP); Ueda, Kenjiro, Minato-ku, Tokyo 108-0075 (JP); Yoshimura, Koji, Minato-ku, Tokyo 108-0075 (JP)
(74) Representative: Lewis, Darren John

(56) References cited:
- WO-A1-2008/000894
- WO-A2-02/29510
- WO-A2-03/085952
- WO-A2-2005/003887

## Description

The present invention relates to an information processing apparatus, an information processing method, and a program. Particularly, the present invention relates to an information processing apparatus, an information processing method, and a program used in a system which can prevent content from being improperly used and track sources of improperly distributed content.

Recently, data communication through networks such as the Internet has become widespread, and a lot of image data, music data, and the like have been widely distributed through these networks.

For a lot of content such as music data, image data, and the like, creators or sellers thereof have copyright, distribution rights, and the like. Therefore, when a service provider provides content to a user from a server through the network, for example, usage control is generally performed in order to permit only users who have qualified usage rights to use the content.

Specifically, control processing is performed in which the content is sent as encrypted content such that the content can be decoded only with an encryption key that the user who properly purchased the content holds, for example. If such processing is performed, however, the content is disorderly distributed if the user distributes the decoded content through the network again.

It is desirable to provide an information processing apparatus, an information processing method, and a program which can specify distribution sources of content which has been improperly distributed.

International Patent Application WO 2005/003887 describes the preparation of two or more differently watermarked master media files for a content item. Each media file is divided into an ordered sequence of segments; the first segment in one master corresponding to the first segment of the (or each) other master etc. A unique output media file is generated by pseudo-randomly selecting one segment at each segment position in the sequence from the segments at the corresponding position in two or more masters. The pseudo random selection of master from which each segment is to be copied may be represented as a pseudo random number sequence, each output media file can be uniquely identified by its associated pseudo-random number sequence.

International Patent Application WO 2008/000894 describes the preparation of content for distribution, where selected portions of the content data are extracted and watermarked while the bulk of the content data [from which the selected data is missing] is distributed by a convenient mass distribution mechanism, such as on an optical disk or as a broadcast signal. The extracted data is then obtained separately via a bidirectional communication channel and inserted at the original positions in the incomplete content data from which it was extracted.

According to a first aspect of the present invention, there is provided an information processing apparatus including a data processing unit which generates content to be distributed to a client; and a communication unit which sends the content generated by the data processing unit, wherein the data processing unit combines a plurality of watermarking record blocks, each of which is obtained by embedding watermarking data into a block as section data of the content, generates content in which different watermarking data sequences are set in units of distribution processing with respect to the clients, and sends the generated content to the clients through the communication unit.

Moreover, the data processing unit may divide content without watermarking record blocks, generate a plurality of different watermarking record content in which different watermarking data is embedded in each block, and generate content in which different watermarking data sequences are set in units of distribution processing with respect to the clients by selecting different combinations of blocks from among the plural different watermarking record content items in units of the distribution processing with respect to the clients.

Furthermore, the data processing unit may set a watermarking data sequence of content to be sent to the client as a data sequence including a unique ID as an identifier corresponding to each distribution processing.

Furthermore, the data processing unit may calculate a falsification verification value with to the unique ID and set a watermarking data sequence of content to be sent to the client as a data sequence including the unique ID and the falsification verification value.

Furthermore, the data processing unit may calculate an error correction code with respect to combination data between the unique ID and the falsification verification value and set a watermarking data sequence of content to be sent to the client as a data sequence including the unique ID, the falsification verification value, and the error correction code.

Furthermore, the data processing unit may set each block as section data of the content as an individual stream file designated by a play item set in a playlist file as a reproduction control information file.

Furthermore, the data processing unit may provide the common playlist file to the clients to which content with differently set watermarking data sequences has been provided.

Furthermore, the data processing unit may provide to the client only a plurality of blocks constituting a part of reproduction content in the client, generate a plurality of blocks with differently set watermarking data sequences in units of distribution processing with respect to the clients, and send the generated blocks to the clients through the communication unit.

Furthermore, the data processing unit may execute processing of generating management information making a correspondence relationship between the unique ID and information for specifying the client, and recording the generated management information in a storage unit.

Furthermore, the data processing unit may analyze a watermarking data sequence included in content, obtain the unique ID, and specify a client as a content distribution destination based on the management information.

Furthermore, the data processing unit may analyze a watermarking data sequence included in content, execute error correction processing with an error correction code included in the watermarking data sequence, and further verify the presence of falsification in a unique ID included in the watermarking data sequence based on a falsification verification value included in the watermarking data sequence.

According to a second aspect of the present invention, there is provided an information recording medium which records therein content which are constituent data of content to be reproduced in an information processing apparatus and includes missing data parts; and a program to be applied for executing data obtaining processing for the missing data parts of the content, wherein the information processing apparatus to which the information recording medium is attached is made to execute the program to perform processing of sending user information and an identifier of the information recording medium or a content ID to a server, obtain data blocks of the missing data parts, in each of which watermarking is recorded, from the server, and generate reproduction content.

In the information recording medium, the program may include reproduction control information for executing reproduction processing by combining content with the missing data parts and the data blocks for the missing data parts, in each of which watermarking is recorded, such that the information processing apparatus executes reproduction processing of reproduction content to which the reproduction control information is applied.

According to a third aspect of the present invention, there is provided an information processing apparatus including a data processing unit which executes content reproduction processing, wherein the data processing unit performs content reproduction processing by combining content with missing data parts and watermarking record blocks which is data corresponding to the missing data parts and obtained from the server and performs reproduction processing by individually and sequentially reading a stream file including reproduction data of content with the missing data parts and a stream file including the watermarking record block based on reproduction section designating information for play items set in a playlist file as a reproduction control information file.

According to a fourth aspect of the present invention, there is provided an information processing method executed in an information processing apparatus, including the steps of performing data processing by a data processing unit generating content to be distributed to clients; and communicating by a communication unit sending the content generated in the data processing, wherein the data processing includes combining a plurality of watermarking record blocks obtained by embedding watermarking data in blocks as section data of the content and generating content in which different watermarking data sequences are set in units of distribution processing with respect to the clients.

According to a fifth aspect of the present invention, there is provided a program which causes an information processing apparatus to execute information processing including the steps of performing data processing by causing a data processing unit to generate content to be distributed to clients; and communicating by causing a communication unit to send the content generated in the data processing, wherein the data processing includes combining a plurality of watermarking record blocks obtained by embedding watermarking data in blocks as section data of the content and causing the information processing apparatus to generate content in which different watermarking data sequences are set in units of distribution processing with respect to the clients.

According to a sixth aspect of the present invention, there is provided an information processing method executed in an information processing apparatus including the steps of performing data processing by a data processing unit executing content reproduction processing, wherein in the data processing, content reproduction processing is performed by combining content with missing data parts and watermarking record blocks which is data corresponding to the missing data parts and obtained from the server, and reproduction processing is performed by individually and sequentially reading a stream file including reproduction data of content with the missing data parts and a stream file including the watermarking record block based on reproduction section designating information for play items set in a playlist file as a reproduction control information file.

According to a seventh aspect of the present invention, there is provided a program which causes an information processing apparatus to execute processing including the steps of performing data processing by a data processing unit executing content reproduction processing, wherein in the data processing, content reproduction processing is performed by combining content with missing data and watermarking record blocks which is data corresponding to the missing data parts and obtained from the server, and reproduction processing is performed by individually and sequentially reading a stream file including reproduction data of content with the missing data parts and a stream including the watermarking record block based on reproduction section designating information for play items set in a playlist file as a reproduction control information file.

The program can be provided to an information processing apparatus and a computer system which can execute various program codes, for example with the use of a storing medium provided in a computer readable format and a communication medium. By providing such a program in a computer readable format, the processing based on the program is realized in the information processing apparatus and the computer system.

Other purposes, features, and advantages will be apparent by the detailed description based on the embodiments and the accompanying drawings which will be described later. In addition, the system in this specification means a logical assembling structure including a plurality of apparatuses and is not limited to the component apparatuses in one case.

According to another aspect, a configuration can be provided which can examine generation sources based on improperly distributed content. Specifically, blocks as segment data of content are combined with plural digital watermarking recording blocks, and content for which a different digital watermarking data sequence is set in units of distribution processing for a client are created and provided to the client. The digital watermarking data sequence of the content to be provided to the client is set so as to include a unique ID which is a unique identifier in units of distribution processing, a Message Authentication Code (MAC) for the unique ID, and an error correction code (ECC) for (unique ID + MAC). By performing such content distribution, it is possible to analyze improperly distributed content, read the digital watermarking data sequence, obtain the unique ID, and thereby to specify the distribution source when the improperly distributed content is found.

### BRIEF DESCRIPTION OF THE DRAWINGS

Fig. 1 is a diagram illustrating an outline of an embodiment;
Fig. 2 is a diagram illustrating a specific example of content provision processing in a server operated by a service provider or the like;
Fig. 3 is a diagram illustrating one specific example of digital watermarking recording content;
Fig. 4 is a diagram illustrating a specific example of digital watermarking data including a unique ID in units of distribution content;
Fig. 5 is a diagram illustrating a specific example of digital watermarking data including a unique ID, a MAC, and an ECC in units of distribution content;
Fig. 6 is a diagram illustrating a data configuration example of management information held in a storage unit of a server;
Fig. 7 is a diagram showing a flowchart illustrating processing sequences for content generation and provision executed in a server such as a service provider or the like;
Fig. 8 is a diagram showing a flowchart illustrating a source determination processing sequence executed when improperly distributed content has been found;
Figs. 9A and 9B are diagrams illustrating examples of correspondence relationships between an AV stream file and a playlist file as a reproduction control file;
Fig. 10 is a diagram illustrating an example of a correspondence relationship between an AV stream file and a playlist file as a reproduction control file;
Fig. 11 is a diagram illustrating incomplete content including missing data parts stored in a disk and a configuration example in which content is reproduced by causing a client apparatus to sequentially arrange digital watermarking recording blocks for filling missing data provided from a server;
Fig. 12 is a diagram illustrating examples of segment provision processing and coupling processing between a block with no digital watermarking recording and a digital watermarking recording block;
Figs. 13A and 13B are diagrams illustrating content reproduction processing with the use of a playlist file;
Fig. 14A and 14B are diagrams illustrating content reproduction processing with the use of a playlist file;
Fig. 15 is a diagram showing a flowchart illustrating content reproduction processing with the use of a playlist file;
Fig. 16 is a diagram illustrating an example of a hardware configuration of a server; and
Fig. 17 is a diagram illustrating an example of a hardware configuration of a client.

### DETAILED DESCRIPTION

Hereinafter, detailed description will be made of an information processing apparatus, an information processing method, and a program according to embodiments of the invention with reference to the accompanying drawings. In addition, the description will be made based on the following items.
1. Outline
2. Specific Example of Content Provision Processing by Server
3. Content Generation and Provision Processing Sequence
4. Source Determination Processing Sequence Based on Improperly Distributed Content
5. Correspondence Relationship between Block Setting and Playlist File
6. Example of Coupling Processing between Media Recording Content and Sever Provision Content
7. Examples of Segment Provision Processing and Coupling Processing between Block with No Digital Watermarking Recording and Digital Watermarking Recording Block
8. Example of Reproduction Processing by Content Coupling in Client Apparatus
9. Hardware Configuration Example of Each Apparatus

### [1. Outline]

Hereinafter, detailed description will be made of an information processing apparatus, an information processing method, and a program according to an embodiment of the invention with reference to accompanying drawings.

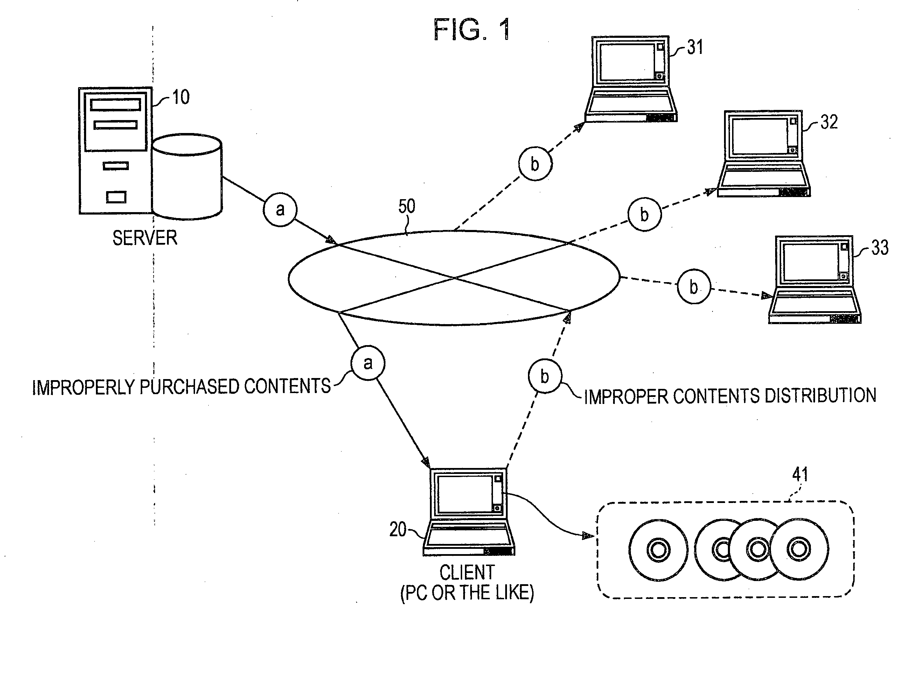

First, description will be made of an outline with reference to Fig. 1. The embodiment is for making it possible to specify originators of improper content distributed on the network, for example.

Fig. 1 shows a server 10 operated by a service provider which provides the content such as movie, music, and the like as a target of the use management.

A client 20 such as a PC accesses a server 10, performs a qualified content purchase procedure, and obtains content. The qualified content is obtained through a route (a) on the network shown in Fig. 1.

The user of the client 20 is permitted to reproduce the qualified purchased content under a prescribed usage restriction. Even when the distribution content is encrypted content, for example, the qualified purchaser has a key for decoding and can decode and reproduce the encrypted content by the application of the key.

However, the user of the client 20 may improperly provide the decoded content to other users (users of clients 31 to 33 shown in the drawing) through the network in some cases. For example, the decoded content may be provided to large indefinite number of users through a path (b) on the network shown in Fig. 1.

Alternatively, the user of the client 20 may provide the decoded content by improperly recording the content in media such as disks and the like to create a large number of improperly copied recording media in some cases. This is shown as a disk 41 in Fig. 1, for example.

The embodiment makes it possible to specify the sources of the improper content when distribution of such improper content is found. In the case shown in Fig. 1, the client 20 corresponds to the source.

### [2. Specific Example of Content Provision Processing by Server]

As described above, the embodiment makes it possible to track the source of the improper content, and the configuration of the content provided by the server 10, which provides proper content, is made to be a special configuration in order to realize this processing.

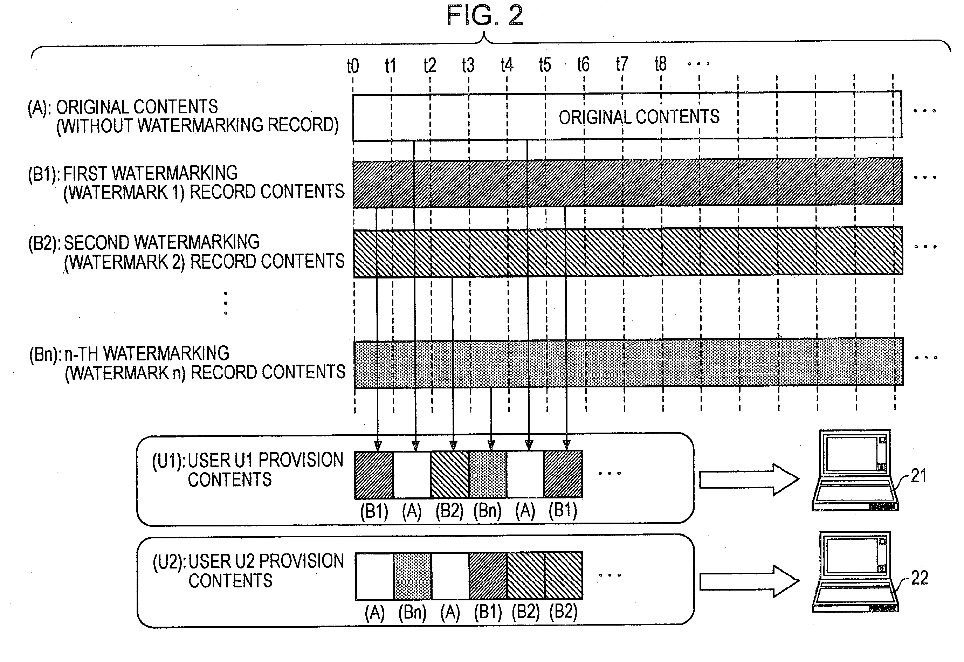

Referring to Fig. 2 and subsequent drawings, description will be made of a specific example of the content provision processing by the server managed by a service provider or the like. The server creates special content which make it possible to specify a client or a user who has distributed the improper content and provides the content to each client.

Fig. 2 is a diagram illustrating a specific example of content provided by the server.

The server has (A) original content shown in Fig. 2. This is content such as movie content or the like, for example.

The server does not provide such original content as they are to each user.

The server creates watermarking record content (B1) to (Bn) shown in Fig. 2 in addition to (A) original content (without watermarking record content).

Each of (B1) to (Bn) is content, in each of which different watermarking data is recorded. That is, different watermarking patterns are recorded in respective (A) original content to create the following plural watermarking record content items.

(B1) First Watermarking (Watermark 1) Record Content
(B2) Second Watermarking (Watermark 2) Record Content
...
(Bn) n-th Watermarking (Watermark n) Record Content
These plural watermarking record content items are created.
Furthermore,
(A) Original Content (Without Watermarking Record)
(B1) First Watermarking (Watermark 1) Record Content
(B2) Second Watermarking (Watermark 2) Record Content
...
(Bn) n-th Watermarking (Watermark n) Record Content

These plural content items are divided into blocks.

For example, the content items (A) to (Bn) are divided into blocks at the same dividing positions (t0, t1, t2, ...) such that the reproduction time period: t0 to t1 is allocated to the first block, t1 to t2 is allocated to the second block, t2 to t3 is allocated to the third block,... as shown in the drawing.

Although the dividing positions (t0, t1, t2, ...) of each of the content items (A) to (Bn) are necessarily identical, the sizes of the blocks including the first block, the second block, the third block, etc. are not necessarily uniform.

Furthermore, as shown in the lower part in Fig. 2, the content items (A) to (Bn), which have been divided into blocks, are combined to create content to be provided to each user.

In the example shown in Fig. 2, (U1) user U1 provision content is content configured such that the block from t0 to t1 is (B1) first watermarking record content, the block from t1 to t2 is (A) original content, the block from t2 to t3 is (B2) second watermarking record content, the block from t3 to t4 is (Bn) n-th watermarking record content, etc.

Each one block is selected from among the content blocks (A) to (Bn) in units of blocks, and the selected blocks are combined to create one user provision content item.

The content to be provided to a user U2 which is a different user from the user U1 is content configured such that the block from t0 to t1 is (A) original content, the block from t1 to t2 is (Bn) n-th watermarking record content, the block from t2 to t3 is (A) original content, the block from t3 to t4 is (B1) first watermarking record content, etc.

That is, the server creates and distributes content with different block combination for each provision content item.

In addition, the content base data is the same even if the block combination is different, only the watermarking data embedded in the content is different, and the content reproduced by the user who received the content is the same reproduction data.

The clients 1 and 21 receive [(U1) user U1 provision content] through the network, store the content in a medium such as a hard disk or the like, and then read the content from the hard disk to perform reproduction processing.

In reproducing the content, the watermarking data is a signal at a sufficiently low level to be observed, and the user U1 can reproduce the content without noticing that the watermarking data is recorded.

The clients 2 and 22 receive [(U2) user U2 provision content] with a block array which is different from that in [(U1) user U1 provision content] through the network, and store the content in a medium such as a hard disk or the like. Thereafter, the clients 2 and 22 read the content from the hard disk and perform reproduction processing. The user U2 can also reproduce the content without noticing that the watermarking data is recorded.

As described above, the server provides each distribution content item to each user (client) as content all of which are set to have different block combinations,

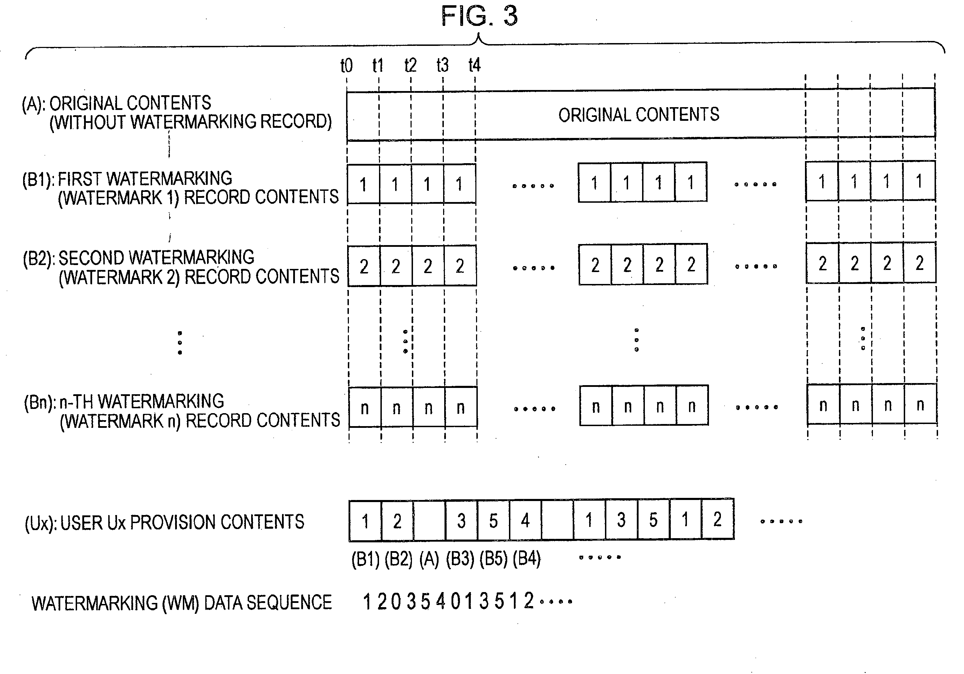

With reference to Fig. 3, description will be made of one specific example of watermarking record content.

Fig. 3 shows plural content items including:
(A) original content (without watermarking record)
(B1) first watermarking (Watermark 1) record content
(B2) second watermarking (Watermark 2) record content
   ...
(Bn) n-th watermarking (Watermark n) record content as the content data used for creating content which the server provides to the client (user) in the same manner as in Fig. 2.

The watermarking (WM) record content items (B1) to (Bn) are respectively set as content which records the watermarking data set so as to include:
(B1) the content in which data [1] is recorded in each block as watermarking data (B2) the content in which data [2] is recorded in each block as watermarking data
   ...
(Bn) the content in which data [n] is recorded in each block as watermarking data.

In addition, although various kinds of setting can be made for embedding the watermarking, the information regarding the presence of the watermarking and multiple items of data regarding the combination of watermarking data (1 to N) are recorded in one block, for example.

For example, bit data (1) is recorded along with the information indicating that the watermarking is present, in plural high-frequency regions included in one block (t0 to t1) of (B1) first watermarking (Watermark 1) record content. Such data is at a level which is not observed with the naked eyes when the image is reproduced, and is the data at an extremely low level which can be detected through the watermarking detection processing.

In the example shown in Fig. 3,
(B1) first watermarking (Watermark 1) record content is set such that the same watermarking data [1] is recorded in all blocks of the content, and
(B2) second watermarking (Watermark 2) record content are set such that the same watermarking data [2] is recorded in all blocks of the content.

In the same manner, the n-th watermarking (Watermark n) record content is set such that the same watermarking data [n] is recorded in all blocks of the content.

The content provision server such as a server provider uses plural watermarking record content items with such setting to create content to be provided to the user.

The (Ux) user Ux provision content shown in Fig. 3 includes the block selection sequence of (B1), (B2), (A), (B3), (B5), (B4), ..., and the watermarking bit sequence of the content is 1, 2, 0, 3, 5, 4, 0, etc.

In addition, the original content block in which the watermarking is not recorded is regarded as [0] in this example.

Moreover, the setting is also applicable in which the original content block is not be used.

As shown in Fig. 3, n watermarking record content items (B1) to (Bn) are watermarking record content items in which the same watermarking data [1] to [n] are recorded in all blocks.

It is possible to create the distribution content in which various different watermarking data sequences are set by selecting and arranging the content in units of blocks from among the combinations of n kinds of watermarking record content items (B1) to (Bn) or the combinations of n kinds of watermarking record content and the original content in which the watermarking is not embedded.

The server creates and provides the distribution content with different block arrays, that is, different watermarking data sequences for each new content distribution.

The server manages a part of data of the watermarking data sequence included in the distribution content to be provided to the client (user) as a unique ID corresponding to the distribution content.

This unique ID is registered and held as the management information of the server.

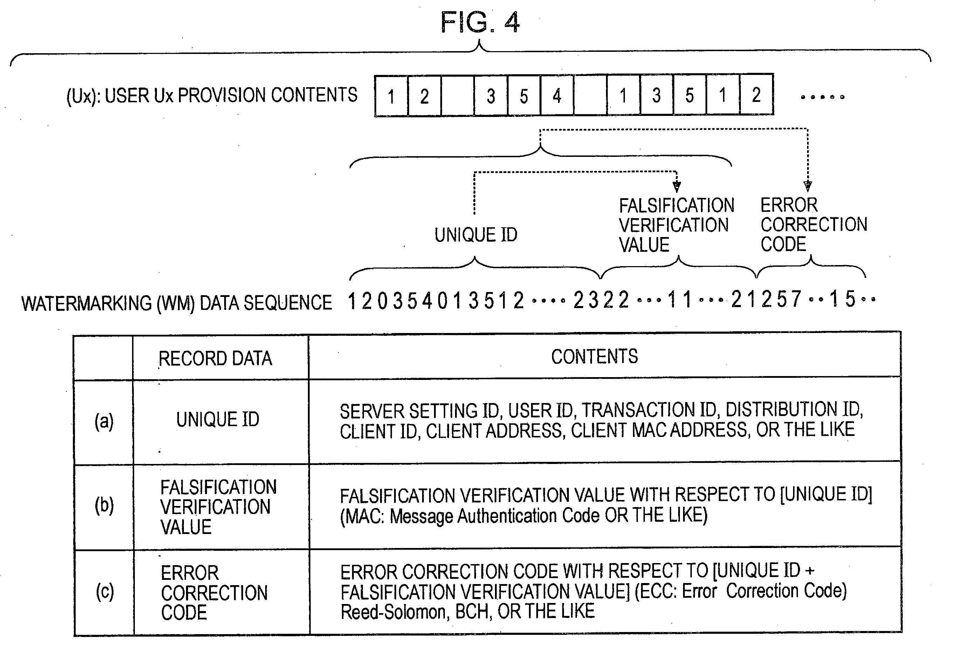

Description will be made of a specific example of watermarking data including the unique ID in units of distribution content with reference to Fig. 4.

Fig. 4 shows (Ux) user Ux provision content as one user distribution content item to be provided to the user Ux, which is described above with reference to Fig. 3.

Furthermore, the drawing shows the watermarking (WM) data sequence corresponding to the block array of the content.

The watermarking data sequence is 1203540....

This watermarking data sequence includes the data such as:
(1) a unique ID set corresponding to the distribution content,
(2) a falsification verification value (MAC: Message Authentication Code) with respect to the unique ID, and
(3) an error correction code (ECC) with respect to (the unique ID and the MAC value).

In addition, the data combination of (1) to (3) is repeatedly set in one distribution content item.

The unique ID is an ID, which is set corresponding to the distribution content, with which it is possible to specify the content. This unique ID may be an ID created by random number generation processing based on the content distribution ID, for example, or an user ID, a transaction ID, a distribution ID, a client apparatus ID, a client address, a client MAC address, or the like may be applied as shown in Fig. 4. Any ID is applicable as long as it is an ID with which each distribution content item can be specified.

The falsification verification value is a falsification verification value with respect to the unique ID, and the MAC (Message Authentication Code) is used, for example.

The error correction code is an error correction code (ECC: Error correction code) with respect to (the unique ID and the MAC value), and data such as Reed Solomon, BCH or the like is used, for example.

The server executing the content distribution firstly decides the unique ID corresponding to the distribution content, then calculates the MAC value corresponding to the unique ID, and further, calculates the ECC with respect to (the unique ID + MAC).

The watermarking data sequence which coincides with the data sequence including [the unique ID/MAC/ECC] set as the result is decided, and a block is sequentially selected from among the content described above with reference to Figs. 2 and 3, that is, from among the plural content inducing
(A) original content (without watermarking record)
(B1) first watermarking (Watermark 1) record content
(B2) second watermarking (Watermark 2) record content
...
(Bn) n-th watermarking (Watermark n) record content, based on the decided watermarking data sequence, to create the distribution content.

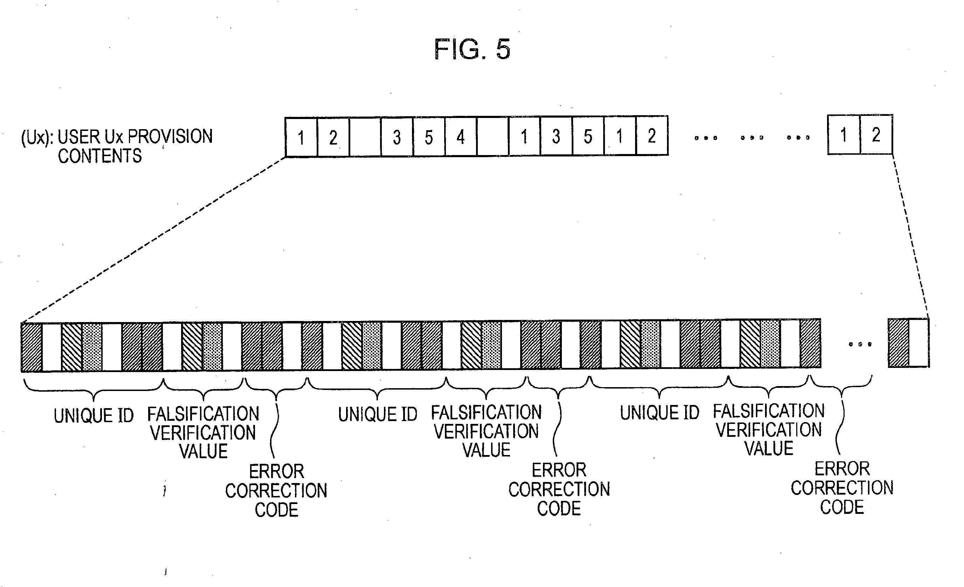

In addition, the data sequence including [the unique ID/MAC/ECC] is repeatedly set in the content as shown in Fig. 5.

The server which distributes the content records the management information including the unique ID of the distribution content in the storage unit of the server every time the server executes the content distribution.

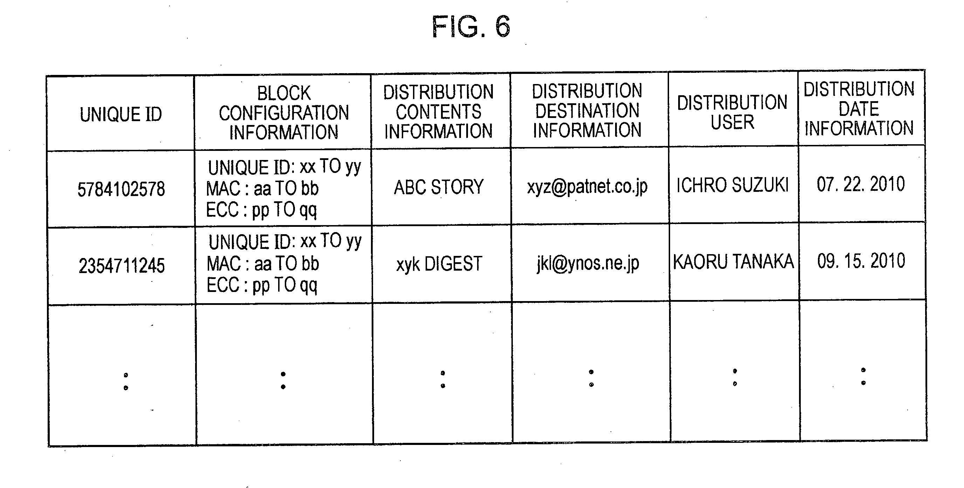

Fig. 6 shows a data configuration example of the management information held in the storage unit of the server.

As shown in Fig. 6, the management information includes information such as a unique ID corresponding to the distribution content, block configuration information, distribution content information, distribution destination information, distribution user information, and distribution date information, for example.

In addition, the block configuration information is the information indicating which block from among the blocks constituting the content is the unique ID recording block, the MAC recording block, or the ECC recording block.

The example of the management information shown in Fig. 6 is just an example, all items of the information are not necessary, and it is also applicable to held the information other than the above information as the management information.

It is not necessary to set the block configuration information as the registration information corresponding to the distribution content if a block configuration with a uniform data arrangement is set and distributed without changing the data arrangement for each distribution content item.

However, it is necessary to make a correspondence relationship between the unique ID and the information for specifying the distribution destination for registration.

### [3. Content Generation and Provision Processing Sequence]

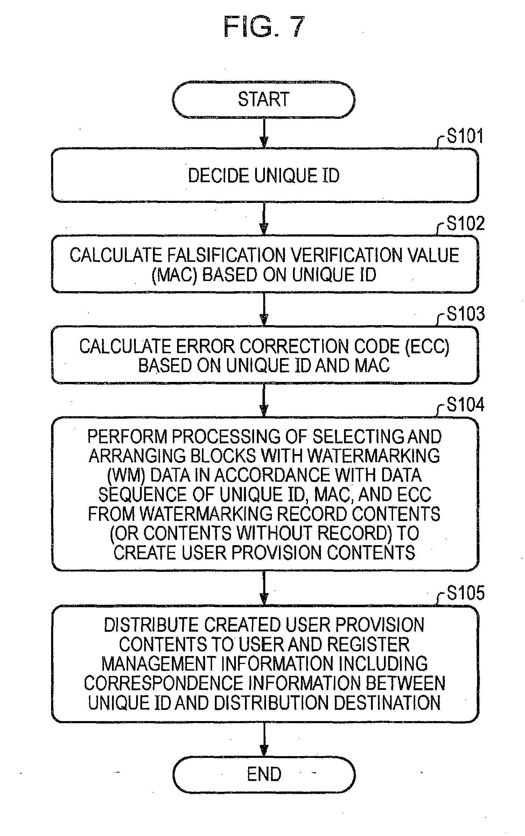

Next, description will be made of the content generation and provision processing sequence executed by the server such as a service provider or the like with reference to the flowchart shown in Fig. 7.

The processing based on the flow shown in Fig. 7 is executed by a data processing unit of the server.

First, the unique ID corresponding to the distribution content is decided in Step S101. The decision processing of the unique ID is executed based on an algorithm which has been decided in advance in the server. For example, it is possible to decide the ID by the random number generation processing or based on the address of the user apparatus of the distribution destination or the user ID.

If the decision of the unique ID is completed in Step S101, a falsification verification value (MAC) based on the decided unique ID is then calculated in Step S102.

If the MAC calculation is completed in Step S102, an error correction code (ECC) with respect to (the unique ID + MAC) is then calculated in Step S103. For example, the ECC data such as Reed Solomon, BCH or the like is calculated.

The blocks constituting the content are then decided in Step S104 so as to set the watermarking data sequence which is the same as the data sequence of the unique ID, the MAC, and the ECC decided or calculated in Steps S101 to S103.

That is, the user provision content is created by performing the processing of selecting and arranging the blocks with the watermarking (WM) data in accordance with the data sequence of the unique ID, the MAC, and the ECC from among the watermarking record content (or content without watermarking record).

Specifically, blocks are sequentially selected from the content described above with reference to Figs. 2 and 3, that is, plural content items including:
(A) original content (without watermarking record)
(B1) first watermarking (Watermark 1) record content
(B2) second watermarking (Watermark 2) record content
   ...
(Bn) n-th watermarking (Watermark n) record content
   to create the distribution content in which the same watermarking data sequence as the data sequence of the unique ID, the MAC, and the ECC is set.

Finally, the content created in Step S104 is provided to the user, and the management information including the correspondence information between the unique ID and the distribution destination is registered in Step S105. For example, the management information shown in Fig. 6 is registered.

### [4. Source Determination Processing Sequence Based on Improperly Distributed Content]

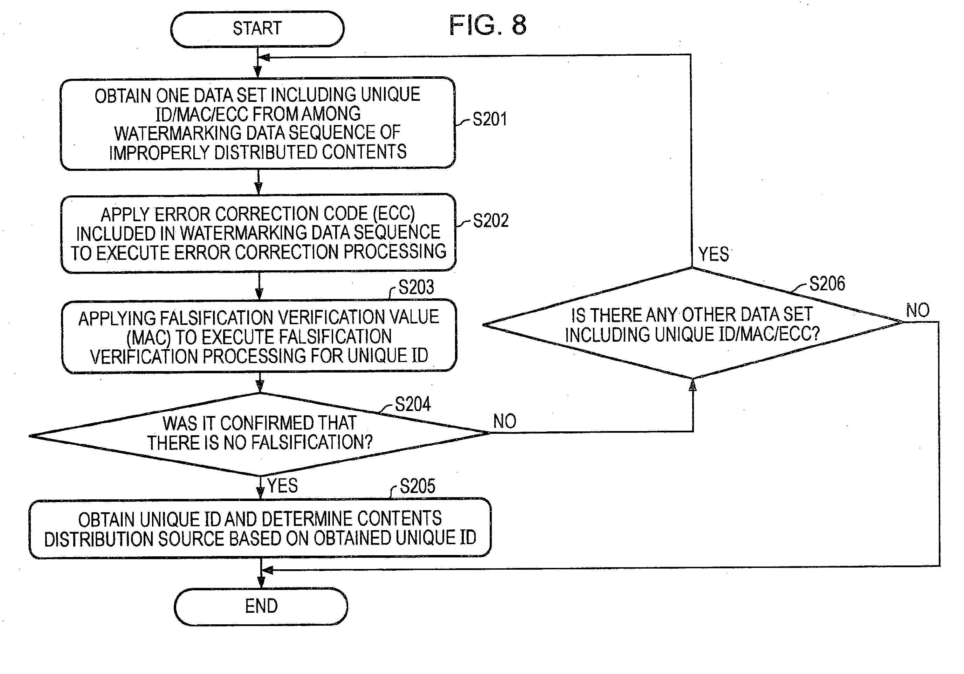

Next, description will be made of the source determination processing sequence executed when improperly distributed content is found with reference to the flowchart shown in Fig. 8.

The processing based on the flow shown in Fig. 8 is the processing executed by the data processing unit of the server of the service provider which has executed the content distribution, for example.

First, detection of the watermarking data of the improperly distributed data is executed, and one combination of data set [the unique ID/MAC/ECC] is obtained from among the watermarking data sequence in Step S201.

As described above with reference to Fig. 5, plural data sets [the unique ID/MAC/ECC] are included in the content, and one combination of the data set is obtained from among them.

Then, in Step S202, the error correction processing of (the unique ID + MAC) data is executed with the use of the error correction code (ECC) in the data set [the unique ID/MAC/ECC] obtained in Step S201.

Then, the falsification verification of the unique ID is executed with the use of the MAC in (the unique ID + MAC) data after the error correction in Step S103.

Specifically, the MAC calculation is executed based on the unique ID read from the distribution content, and determination is made regarding whether or not the calculated MAC coincides with the MAC value read from the content.

If the calculated MAC coincides with the MAC value, determination is made such that falsification of the unique ID has not been made and the unique ID is the correct one.

If the calculated MAC does not coincide with the MAC value, determination is made such that there is a possibility in that the unique ID has been falsified. In such a case, processing proceeds from Step S204 to Step S206.

In Step S206, determination is made regarding whether or not the data set of [the unique ID/MAC/ECC] is included in the other parts of the content to be verified, and the processing returns to Step S201 to repeat the verification processing from Step S201 for unverified data set if the data set is included in the other parts.

As already described with reference to Fig. 5, plural data sets of [the unique ID/MAC/ECC] are recorded in one content item, among which the data set without falsification may be included, and the verification processing is sequentially executed while changing the data set to be verified.

If it is confirmed based on the MAC verification in Step S204 that the falsification has not been made for the unique ID as the result of such processing, processing proceeds to Step S205.

In Step S205, the unique ID for which it has been confirmed that falsification was not made is obtained, the identical unique ID is searched for from among the unique IDs registered in the management information which is already described with reference to Fig. 6, and the content distribution destination information recorded corresponding to the unique ID registration entry is obtained. It is determined that the thus obtained content distribution destination is the source of the improperly distributed content.

In addition, if errors in the MAC verification are determined for all data sets of [the unique ID/MAC/ECC] in the content in Step S206, the unique ID is not obtained from the content. However, if there are multiple improperly distributed content, it is possible to sequentially obtain and verify the content, and it is possible to obtain a correct unique ID as long as the MAC verification succeeds even for one of them.

As described above, since the unique ID corresponding to the distribution content is recorded as watermarking according to the described configuration, it is possible to specify which content is the original content even if the proper content is redistributed or copied content is improperly distributed, and it is possible to specify the destination to which the proper content has been provided at first, based on the management information shown in Fig. 6.

### [5. Correspondence Relationship between Block Setting and Playlist File]

As already described with reference to Figs. 2, 3, and the like, individual distribution content has different block configurations within the overall configuration.

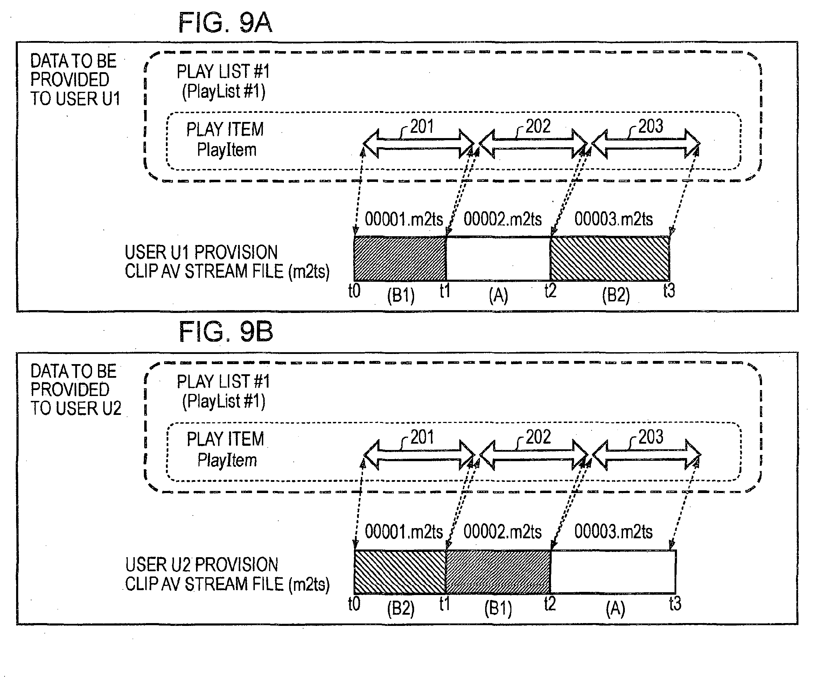

Description will be made of one example of the content having different block configurations, that is, the correspondence relationship between the AV stream file and the playlist file as a reproduction control file, with reference to Figs. 9A and 9B.

Fig. 9A shows the data to be provided to the user U1, and Fig. 9B shows the data to be provided to the user U2.

A set of AV stream file with a different block array is provided to each user.

However, the common playlist file is provided to the both users, and it is possible to reproduce the content (AV stream) with different block arrays with the use of the same playlist file.

(a) The block setting for the AV stream file of the data to be provided to the user U1 shown in Fig. 9A is made such that the reproduction data for the time period t0 to t1 is (B1) first watermarking record content block, the reproduction data for the time period t1 to t2 is (A) content block without watermarking record, and the reproduction data for the time period t2 to t3 is (B2) second watermarking record content block.

On the other hand, (b) the block setting for the AV stream file of the data to be provided to the user U2 shown in Fig. 9B is such that the reproduction data for the time period t0 to t1 is (B2) second watermarking record content block, the reproduction data for the time period t1 to t2 is (B1) first watermarking record content block, and the reproduction data for the time period t2 to t3 is (A) content block without watermarking record.

Although the reproduction data is differently set as described above, the common file name is set for all of the data to be provided to U1 and U2 for the AV stream file. That is, the name of the reproduction data for the time period t0 to t1 is AV stream file [00001 .m2ts], the name of the reproduction data for the time period t1 to t2 is AV stream file [00002.m2ts], and the name of the reproduction data for the time period t2 to t3 is AV stream file [00003.m2ts].

As shown in the drawing, the play items 201 to 203 as reproduction section designating information of the AV stream file (xxxxx.m2ts) are set in the playlist file.

In such play items, the head play item 201 has reproduction section designating information which designates the AV stream file [00001.m2ts].

The second play item 202 has the reproduction section designating information which designates the AV stream file [00002.m2ts].

The third play item 203 has the reproduction section designating information which designates the AV stream file [00003.m2ts].

It is possible to perform reproduction with the use of the common playlist even for the content constituted by AV stream files with different block configurations.

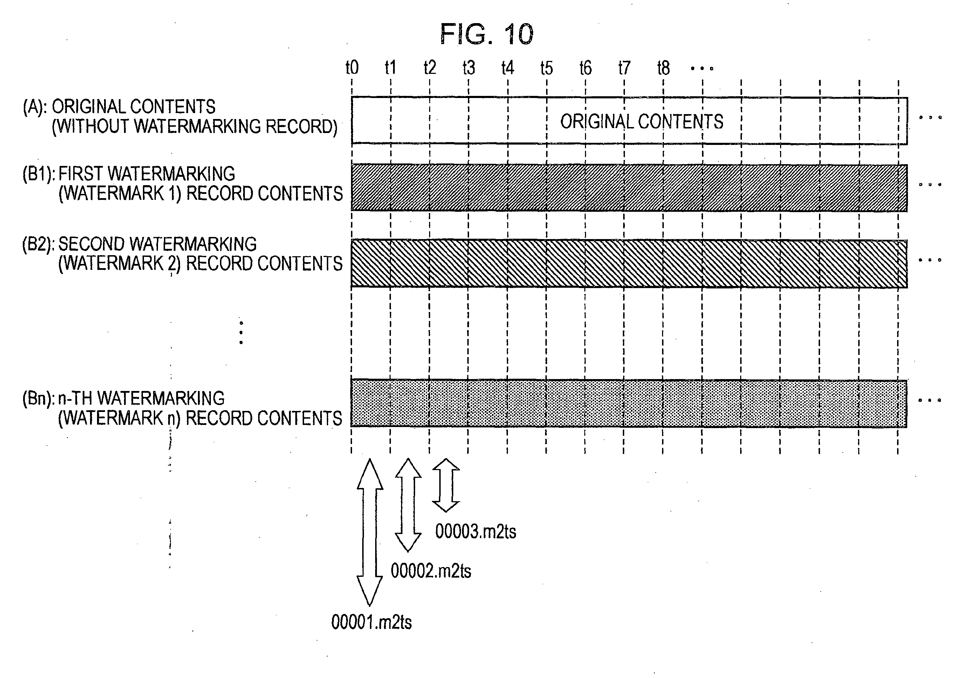

That is, with respect to the corresponding blocks as the common reproduction time period of the plural content items including
(A) original content (without watermarking record),
(B1) first watermarking (Watermark 1) record content,
(B2) second watermarking (Watermark 2) record content,
(Bn) n-th watermarking (Watermark n) record content,
as shown in Fig. 10, the common AV stream file name is set, and configuration is made such that the corresponding blocks are designated and reproduced by the common play item set in the playlist file.

With such setting, it is possible to provide the playlist file as a common file even if the block configuration of the content to be provided to each user is different.

### [6. Example of Coupling Processing between Media Recording Content and Sever Provision Content]

In the aforementioned embodiment, description is made of the configuration example in which a server couples plural blocks, completes the whole reproduction content in the server, and then provides the reproduction content to the client as a user apparatus.

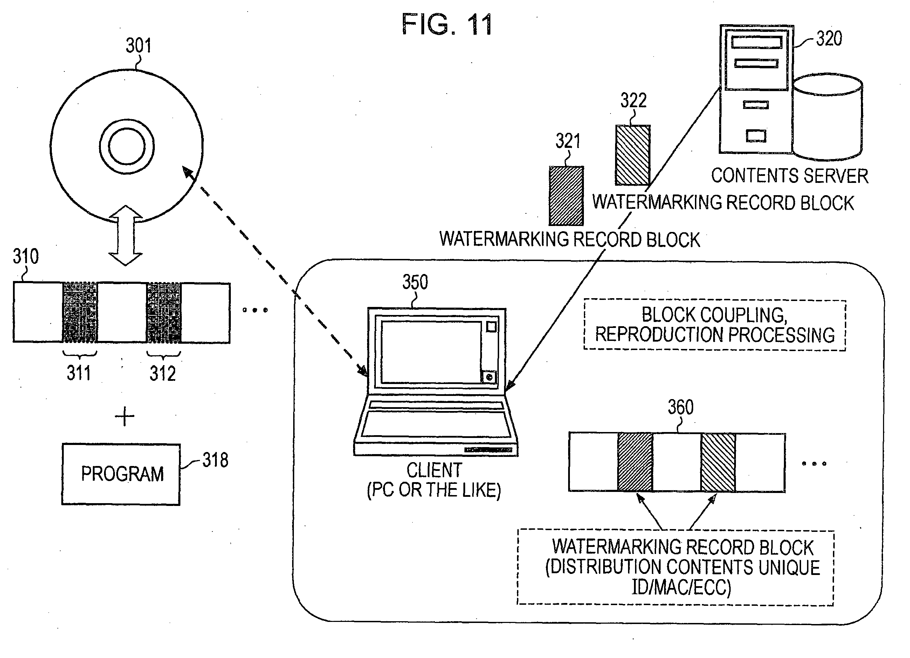

Next, description will be made of a configuration example in which the client apparatus executes the processing of sequentially arranging the incomplete content including the missing data parts recorded in the disk and the watermarking record blocks for filling the missing data parts, which is provided by the server, to execute the content reproduction, with reference to Fig. 11.

The content recording disk 301 shown in Fig. 11 is the disk which records the content provided to the user with or without compensation. For example, the content such as movie or the like is recorded. However, the record content 310 recorded in this disk 301 has missing data blocks 311, 312, ... as shown in the drawing. That is, only the content data with skipped parts are reproduced if the content is reproduced as it is.

The client 350 as the user apparatus sets this disk 301 in the client apparatus 330 and connects to the server 320. A disk ID as a disk identifier, a content ID as an identifier of the content recorded in the disk, and further, a program 318 for content generation processing by the server connection processing and the block coupling, which will be described later, are recorded in the disk 301. In addition, a configuration is also applicable in which the disk ID and the content ID are recorded in the program 318.

The client apparatus 350 executes the connection to the server based on this program 318 and provides the disk and client specification information such as the disk ID, the client ID, the user ID, and the like to the server 320. In addition, such series of procedures are executed as processing based on the program 318, instruction by the server connected based on the program 313, or a provided program.

The server 320 determines the content recorded in the disk and the missing blocks based on the disk ID or the content 10 and provides the watermarking record blocks 321, 322, .. corresponding to the missing blocks to the client apparatus 350.

In addition, the watermarking record blocks 321, 322, ... are blocks in which the same watermarking data as that described in the aforementioned embodiment is recorded. That is, the data of
(1) the unique ID set corresponding to the distribution content,
(2) the falsification verification value (MAC: Message Authentication Code) with respect to the unique ID, and
(3) the error correction code (ECC: Error correction code) with respect to (the unique ID and the MAC value)
   is included.

The server 320 provides these watermarking record blocks 321, 322, ... to the client 350 and generates and records the management information including the unique ID set as the watermarking and the provision destination information (information regarding the client apparatus and the user) of the watermarking record blocks 321, 322, .... The same management information as that described above with reference to Fig. 6 is generated and recorded.

The client apparatus 350 sets the watermarking record blocks 321, 322, ... received by the server 320 to the missing data parts of the record content read from the disk 301 to create the reproduction content 360. In addition, the program 318 for the generation processing of the reproduction content by this block coupling is recorded in the disk 301, and the client apparatus 350 generates the reproduction content 360 based on this program 318. In addition, a configuration is also applicable in which the generation processing of the reproduction content 360 is executed with the use of the program provided by the second server connected based on the program 318. Moreover, the aforementioned playlist file is included in the program.

As a result, the reproduction content 360 is completed as shown in the drawing, and the client apparatus 350 can perform the content reproduction.

As described above, the unique ID, the MAC, and the ECC are recorded in the watermarking record blocks included in the reproduction content 360.

Therefore, when the user improperly distributes the content, such as redistribution of the content through the network, for example, or recording and distributing the content in another medium, it is possible to specify the distribution source, that is, the client 350 or the user of the client 350 by executing the processing described above with reference to the flowchart in Fig. 8, based on the improperly distributed content.

In addition, when the content reproduction is performed in the client apparatus 350, the record content 310 recorded in the disk 301 and the watermarking record blocks 321 and 322 are sequentially read and reproduced based on the play items within the playlist file with the use of the aforementioned playlist file, for example.

As the reproduction processing, the processing is applicable in which the client apparatus 350 mounts the disk 301 and connects to the server 320 to sequentially receive the necessary watermarking record blocks 321, 322, ... from the server 320 for reproduction.

In addition, the processing is also applicable in which the watermarking record blocks 321, 322, ... received from the server 320 are stored in the storage unit such as a hard disk or the like, the disk 301 is attached to set and reproduce a virtual file system (VFS) including both the record data of the disk and the record data of the hard disk.

### [7. Examples of Segment Provision Processing and Coupling Processing between Block with No Digital Watermarking Recording and Digital Watermarking Recording Block]

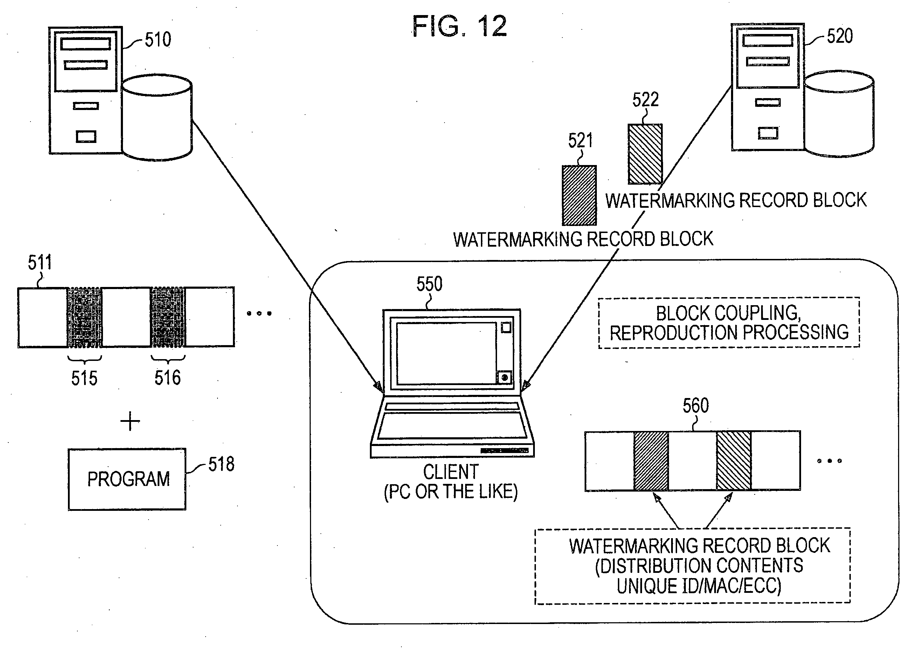

Next, description will be made of examples of section provision processing and coupling processing between the block without watermarking record and the watermarking record block with reference to Fig. 12.

In this processing example, the incomplete content (the content without watermarking record) including the missing data part recorded in the disk, which is described above with reference to Fig. 11, is provided from the first server 510 shown in Fig. 12 as the common content to be provided to each user.

On the other hand, the second server 520 shown in Fig. 12 provides a different watermarking record block for each distribution processing as a complement bloc for the missing data part in the same manner as the content server 320 described with reference to Fig. 11.

The first server 510 which distributes the common content including the missing data part without the watermarking record may be a caching server, for example.

The user common provision content 511 constituted by the blocks without watermarking record, which is commonly provided to each user, is provided with or without compensation from the first server 510, for example, to the user. In the content provision processing, it is not necessary to provide the information regarding the client or the user, and provision is made as free content, for example, that is, content which can be freely downloaded.

However, the user common provision content 511 includes the missing data blocks 515, 516, ... as shown in the drawing. That is, only the content data with skipped parts can be reproduced if the content is reproduced as it is.

Moreover, when providing the user common provision content 511, the first server 510 provides the content ID of the provision content, and the program 518 for the server connection processing with respect to the second server 520 and the content generation processing by the block coupling, which will be described later, to the client 550. In addition, a configuration is applicable in which the content ID is recorded in the program 518.

The client 550 as the user apparatus executes the connection with respect to the second server 520 based on the program 518 and provides the content ID and the client ID corresponding to the content obtained from the first server 510 and the information for specifying the content and the client such as the user ID or the like to the server 520. In addition, the series of procedures are executed as the processing in response to the program 518, the instruction from the second server connected based on the program 518, or the provided program.

The second server 520 determines the content and the missing blocks based on the content ID or the like received from the client 550 and provides the watermarking record blocks 521, 522, ... corresponding to the missing blocks to the client apparatus 550.

In addition, the watermarking record blocks 521, 522, ... are the blocks in which the same watermarking data as that described in the aforementioned embodiment is recorded. That is, the watermarking record blocks 521, 522, ... includes the data such as
(1) the unique ID set corresponding to the distribution content,
(2) falsification verification value (MAC: Message Authentication Code) with respect to the unique ID, and
(3) an error correction code (ECC) with respect to (the unique ID and the MAC value)

The server 520 provides such watermarking record blocks 521, 522, ... to the client 550 and generates and records the management information including the unique ID set as the water marking and the provision destination information (the information regarding the client apparatus and the user) of the watermarking record blocks 521, 522, .... The same management information as that described above with reference to Fig. 6 is generated and recorded.

The client apparatus 550 sets the watermarking record blocks 521, 522, ... received from the second server 520 as the missing data parts of the content received from the first server 510 and generates the reproduction content 560. In addition, the program for executing the generation processing of the reproduction content by the block coupling is included in the program 518 received from the first server 510. The client apparatus 550 generates the reproduction content 560 based on this program 518.

A configuration is also applicable in which the generation processing of the reproduction content 560 is executed with the use of the program provided from the second server connected based on the program 518.

As a result, the reproduction content 560 is completed as shown in the drawing, and the client apparatus 550 can reproduce the content.

As described above, the unique ID, the MAC, and the ECC are recorded in the watermarking record block included in the reproduction content 560.

Accordingly, when the user makes improper content distribution processing such as the redistribution of the content through the network, for example, or the recording and distribution of the content in another medium, it is possible to specify the distribution source, that is, the client 550 and the user of the client 550 by executing the processing, which is described above with reference to the flowchart of Fig. 8, based on the improper distribution content.

Although the first server 510 and the second server 520 are shown as different servers in the example shown in Fig. 12, these servers may be configured as one server.

For example, the second server 520 performs the following content distribution.
(a) The content including the missing data parts without watermarking record is provided to a large indefinite number of users as the content which can be freely downloaded without the processing such as the user confirmation or the like.
(b) For the watermarking record content corresponding to the missing data parts, predetermined processing such as the user confirmation or the like is performed, and the complement blocks recording different water marking data for each distribution unit are provided.

A configuration is also applicable in which the above processing is performed.

### [8. Example of Reproduction Processing by Content Coupling in Client Apparatus]

In the example described with reference to Figs. 11 and 12, the client apparatus individually obtains the following two content items (a) and (b), that is,
(a) the content without watermarking record (with missing data parts)
(b) the content with watermarking record (blocks for complementing the missing data parts) and couples these content items to execute the content reproduction.

The client apparatus can execute the reproduction processing with the use of the playlist file described above with reference to Fig. 9 in this content reproduction processing.

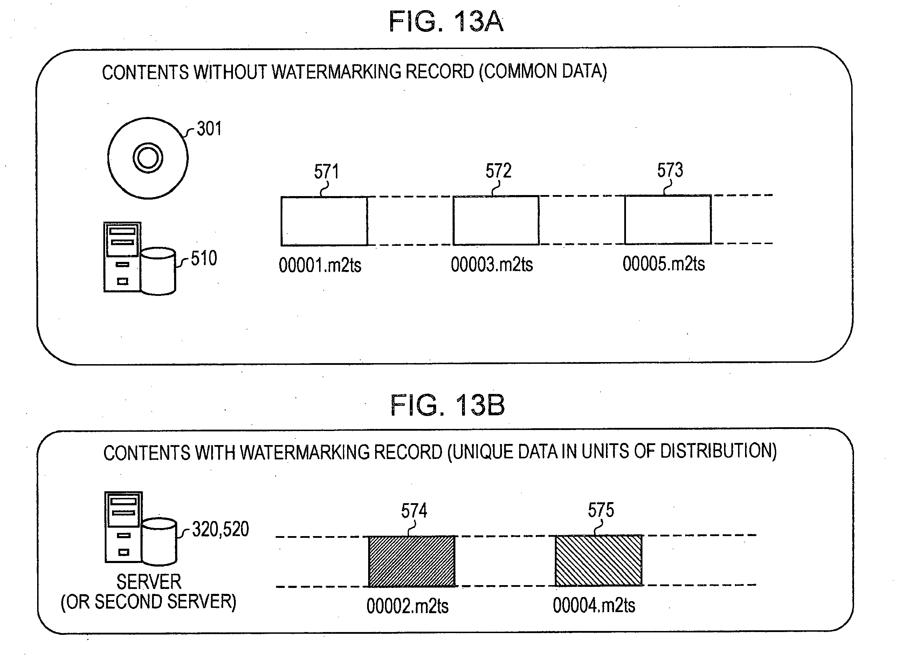

The content reproduction processing with the use of the playlist file will be described with reference to the drawings from Fig. 13.

Fig. 13 shows the following two content items.
(a) the content without watermarking record (common data (with missing parts))
(b) the content with watermarking record (distribution unit unique data (blocks for complementing missing data parts))

In the processing example described with reference to Fig. 11,
(a) the content without watermarking record (common data (with missing parts)) is the data to be read from the disk 301, and
(b) the content with watermarking record (distribution unit unique data (blocks for complementing missing data parts) is the data to be obtained from the server 320.

On the other hand, in the processing example described with reference to Fig. 12,
(a) the content without watermarking record (common data (with missing parts)) is the data to be obtained from the first server 510, and
(b) the content with watermarking record (distribution unit unique data (blocks for complementing missing data parts)) is the data to be obtained from the second server 520.

As shown in Fig. 13, the client individually obtains the data including
(a) the content without Watermarking record (common data (with missing parts))
(b) the content with watermarking record (distribution unit unique data (blocks for complementing missing data parts)) and stores them in the storage unit such as a hard disk or the like. The file to be stored is the individual file (AV clip stream file [xxxxx.m2ts]) in units of sequential reproduction data as shown in Fig. 13, for example.

For (a) the content without watermarking record (common data (with missing parts)), the file names including
common first file 571 = file name: [00001.m2ts]
common second file 572 = file name: [00003.m2ts]
common third file 573 = file name: [00005.m2ts]
are set and stored in the hard disk of the client apparatus.

On the other hand, for (b) the content with watermarking record (distribution unit unique data (blocks for complementing missing data parts)), the file names including
unique first file 574 = file name: [00002.m2ts]
unique second file 575 = file name: [00004.m2ts]
are set and stored in the hard disk of the client apparatus.

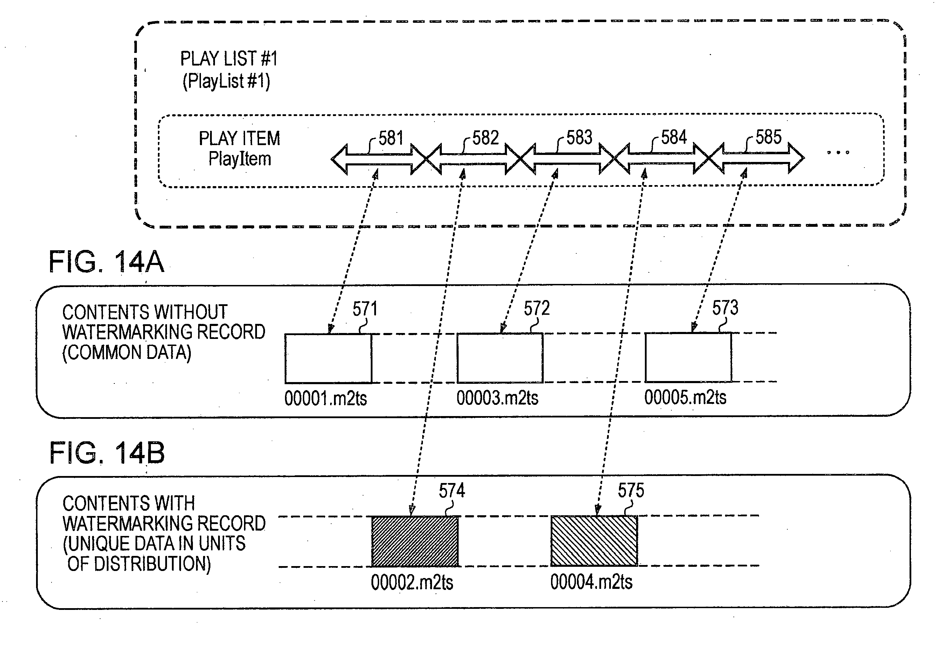

The example of the processing of coupling and reproducing these files will be described with reference to Fig. 14. Fig. 14 shows the same playlist file as that described above with reference to Fig. 9.

This playlist file includes the play items 581 to 585... including the information for designating the reproduction of the AV clip stream file [xxxxx.m2ts].

Each of the play items 581 to 585... includes the information for individually designating the AV clip stream file [xxxxx.m2ts].

Specifically, each play item includes the following information for designating the reproduction section.
(1) The play item 581 includes the information for designating the reproduction of the common first file 571 = file name: [00001.m2ts].
(2) The play item 582 includes the information for designating the reproduction of the individual first file 574 = file name: [00002.m2ts].
(3) The play item 583 includes the information for designating the reproduction of the common second file 572 = file name: [00003.m2ts].
(4) The play item 582 includes the information for designating the reproduction of the individual second file 575 = file name: [00004.m2ts].
(5) The play item 585 includes the information for designating the reproduction of the common third file 573 = file name: [00005.m2ts].

The setting is made as above.

The client apparatus can sequentially reproduce the content set in the plural individual files by using the playlist file with the play items set as described above.

Although the data of (b) the content with watermarking record (distribution unit unique data (blocks for complementing missing data parts)) is different for each distribution unit and includes the combination of different blocks constituted by different watermarking data, all the client apparatus can perform the reproduction with the use of the common playlist file since the file for the same reproduction section (tx to ty) is set to have the same file name as described above with reference to Figs. 9A, 9B and 10.

in addition, the playlist file may be provided to the client 350 from any one of the disk 301 and the content server 320 in the processing example described with reference to Fig. 11.

For example, setting can be made in which the playlist file is provided to the client 350 as a part of the program 318 stored in the disk 301 or in which the playlist file is recorded in the disc as a different file from the program 318 and read by the client 350. Alternatively, another setting is also applicable in which the playlist file is provided from the content server 320 to the client 350 along with the watermarking record blocks 321, 322, ....

On the other hand, the playlist file may be provided to the client 550 from any one of the first server 510 and the second server 520 in the processing example described with reference to Fig. 12.

For example, a setting is applicable in which the playlist file is provided to the client 550 as a part of the program 518 provided from the first server 510, or in which the playlist file is provided to the client 550 as a different file from the program 518. Alternatively, another setting is also applicable in which the playlist file is provided from the second server 520 to the client 550 along with the watermarking record blocks 521, 522, ....

In any setting, the playlist file can be provided to the all clients as the common file.

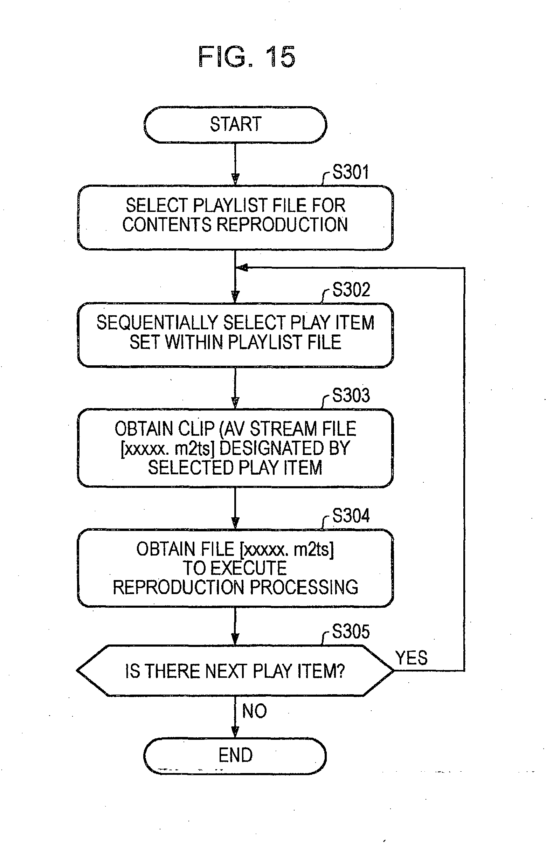

Referring to the flowchart shown in Fig. 15, description will be made of the content reproduction sequence in the client. This processing is executed as the processing of the data processing unit, which executes the reproduction processing, in the client apparatus.

The client apparatus which executes the content reproduction processing selects the playlist file for reproduction in Step S301. In this playlist file selection processing, the playlist file is automatically selected in accordance with the designation of the title of the reproduction content, for example.

Then, the play items set in the selected playlist file are sequentially selected in Step S302. The play items are selected from the top of the playlist file, for example. In addition, when the user designates the reproduction start position, the play item corresponding to the designated position is selected.

Next, the file [xxxxx.m2ts] designated by the selected play item is obtained, and the reproduction processing is executed in Step S303.

The determination is made regarding whether or not there is a subsequent play item, in Step S305. If not, the determination in Step S305 is No, and the content reproduction processing is completed.

If there is a subsequent play item, the determination in Step S305 is Yes, the processing returns to Step S302 to select the subsequent play item and continue the processing from Step S303.

By such reproduction processing with the use of the play item, it is possible to sequentially read and reproduce different AV stream files and realize data reproduction of the mixture of the common data file with no watermarking recorded and Watermarking record blocks as content with individually recorded watermarking data.

In addition, the content reproduction processing on the side of the client includes
(a) a case in which the content completed on the side of the server by coupling the blocks is reproduced, and
(b) a case in which the content is coupled and reproduced on the side of the client as shown in Figs. 11 and 12.

In both cases, it is possible to perform the reproduction processing with the use of the playlist file shown in Fig. 15.

When the content with no watermarking record and the watermarking record content are respectively obtained from different routes as in the example described with reference to Fig. 11 and in the example described with reference to Fig. 12, such data is recorded in a dispersed manner in the hard disk. Alternatively, such data is recorded separately in the disk and the hard disk. In such cases, it is possible to perform the smooth reproduction by the reproduction processing with the use of a virtual file system (VFS) including both the recorded data in the disk and the recorded data in the hard disk and the playlist file shown in Fig. 15.

### [9. Hardware Configuration Example of Each Apparatus]

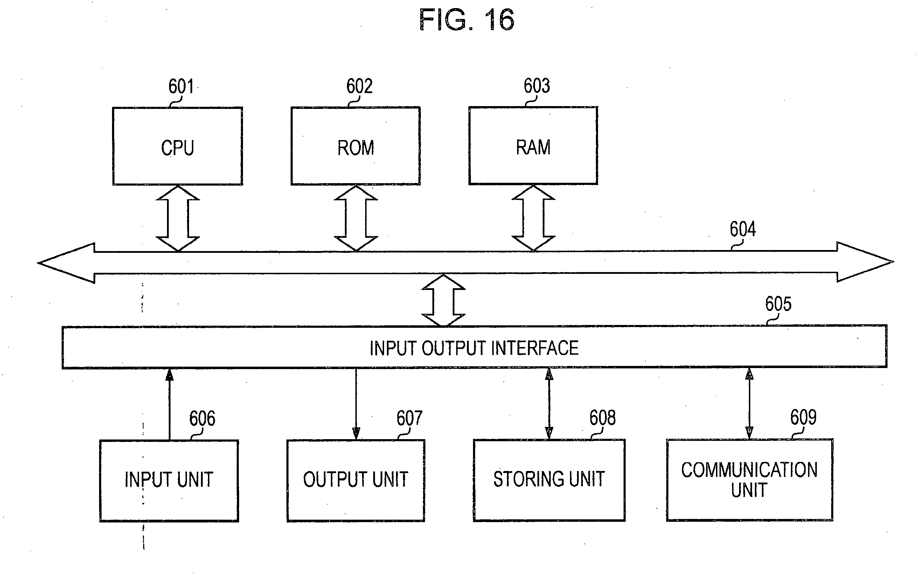

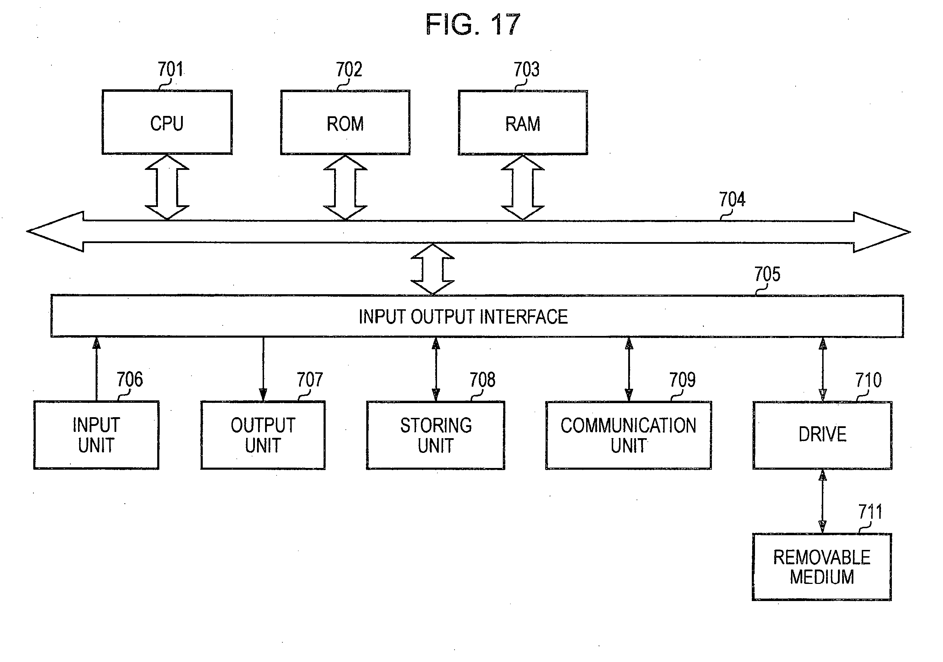

Finally, description will be made of a hardware configuration example of each apparatus which executes the aforementioned processing, with reference to Fig. 16 and 17.

First, description will be made of a hardware configuration example of the server which executes the content provision processing with reference to Fig. 16.

A CPU (Central Processing Unit) 601 functions as a data processing unit which executes various kinds of processing based on the program stored in a ROM (Read Only Memory) 602 or a storage unit 608.

For example, the CPU 601 executes the processing of generating the watermarking record content including blocks with watermarking record which is described above in each aforementioned embodiment, the processing of generating the distribution blocks and the content in which different combinations of watermarking blocks are set in units of distribution, processing of distributing blocks and content, the processing of creating and recording the management data, and the like. The RAM (Random Access Memory) 603 appropriately stores the program and the data executed by the CPU 601. The CPU 601, the ROM 602, and the RAM 603 are connected to each other through the bus 604.

The CPU 601 is connected to an input output interface 605 through the bus 604, and an input unit 606 such as various switches, a keyboard, a mouse, a microphone, and the like and an output unit 607 such as a display, a speaker, and the like are connected to the input output interface 605. The CPU 601 executes various kinds of processing in response to the instruction input through the input unit 606 and outputs the processing result to the output unit 607, for example.

The storage unit 608 connected to the input output interface 605 is a hard disk, for example, and stores the program and various kinds of data executed by the CPU 601. The management information and the like described with reference to Fig. 6 are also recorded, for example.

A communication unit 609 communicates with external apparatuses through the network such as the Internet, the local area network, or the like.

Next, description will be made of a hardware configuration of the client apparatus which receives the content and executes the reproduction processing and the like, with reference to Fig. 17.

The CPU (Central Processing Unit) 701 functions as a data processing unit which executes various kinds of processing based on the program stored in a ROM (Read Only Memory) 702 or a storage unit 708.

For example, the CPU 701 executes the processing of communicating with the server and the processing of recording the data received from the server in the storage unit 708 (hard disk or the like), which are described in each aforementioned embodiment, and the processing of reproducing the data from the storage unit 708 (hard disk or the like).

The RAM (Random Access Memory) 703 appropriately stores the program and the data executed by the CPU 701. The CPU 701, the ROM 702, and the RAM 703 are connected to each other through the bus 704.

The CPU 701 is connected to an input output interface 705 through the bus 704, and an input unit 706 such as various switches, a keyboard, a mouse, a microphone, and the like and an output unit 707 such as a display, a speaker, and the like are connected to the input output interface 705. The CPU 701 executes various kinds of processing in response to the instruction input through the input unit 706 and outputs the processing result to the output unit 707, for example.

The storage unit 708 connected to the input output interface 705 is a hard disk, for example, and stores the program and various kinds of data executed by the CPU 701. A communication unit 709 communicates with external apparatuses through the network such as the Internet, the local area network, or the like.

A drive 710 connected to the input output interlace 705 drives a removable medium 711 such as a magnetic disk, an optical disc, a magneto-optic disc, a semiconductor memory, or the like to obtain various kinds of data such as recorded content, a program, or the like.

The present invention is described in detail with reference to specific embodiments. However, it is apparent that those skilled in the art can modify and substitute the embodiments without departing from the scope of the invention. That is, the present invention is made in order to show examples, and the understanding thereof should not be limited. In order to determine the scope of the invention, Claims should be referred to.

In addition, the series of processing described in this specification can be executed in the hardware, the software, or a composite structure thereof. When the processing is executed by the software, the processing can be executed by installing a program recording a processing sequence in the memory in the computer, or by installing a program in a general computer which can execute various kinds of processing. For example, the program can be recorded in advance in a recording medium. The program can be installed in a computer from the recording medium, or received from the network such as the LAN (Local Area Network) or the Internet and installed in the incorporated recording medium such as a hard disk or the like.

Moreover, the various kinds of processing described in the specification may be executed not only in the time-series manner based on the order of the description but in the parallel or individual manner if necessary or depending on the processing ability of the apparatus which executes the processing. In addition, the system in this specification means a logical assembling structure including a plurality of apparatuses and is not limited to the component apparatuses in one case.

It should be understood by those skilled in the art that various modifications, combinations, sub-combinations and alterations may occur depending on design requirements and other factors insofar as they are within the scope of the appended claims.

## Claims

1. An information processing apparatus (10; 320; 520) comprising:
a data processing unit (601) which generates content to be distributed to a client (20, 21, 22; 350; 550); and
a communication unit (609) which sends the content generated by the data processing unit (601),
wherein the data processing unit (601):
generates a plurality of watermarked record blocks by embedding watermarking data into blocks of original content, each block being a section of data;
generates a unique watermarking data sequence, wherein the unique watermarking data sequence is a data sequence including:
a unique identifier corresponding to each distribution processing with respect to the client,
a falsification verification value, and
an error correction code;
generates watermarked content by repeatedly selecting and arranging the watermarked record blocks in accordance with the unique watermarking data sequence, and
sends the generated watermarked content to the client through the communication unit,
wherein the data processing unit (601) is adapted to calculate the falsification verification value with respect to the unique identifier, the falsification verification value being operable to provide an indication of falsification of the unique identifier, and to calculate the error correction code with respect to the combined data of the unique identifier and the falsification verification value.

2. The information processing apparatus (10; 320; 520) according to Claim 1, wherein the data processing unit (601) divides content without watermarking record blocks, generates a plurality of different watermarking record content items in which different watermarking data is embedded in each block, and generates content in which different unique watermarking data sequences are set in units of distribution processing with respect to the clients by selecting and arranging different combinations of blocks from among the plurality of different watermarking record content items in units of the distribution processing with respect to the clients.

3. The information processing apparatus (10; 320; 520) according to Claim 1,
wherein the falsification verification value is a Message Authentication Code, MAC, value.

4. The information processing apparatus (10; 320; 520) according to Claim 1 or 3, wherein the error correction code is a Reed Solomon code.

5. The information processing apparatus (10; 320; 520) according to Claim 1,
wherein the data processing unit (601) sets each block as section data of the content as an individual stream file designated by a play item set in a playlist file as a reproduction control information file.

6. The information processing apparatus (10; 320; 520) according to Claim 5,
wherein the data processing unit (601) provides the common playlist file to the clients to which content with differently set unique watermarking data sequences has been provided.

7. The information processing apparatus (10; 320; 520) according to Claim 1,
wherein the data processing unit (601) provides to the client only a plurality of blocks constituting a part of reproduction content in the client, generates a plurality of blocks with differently set unique watermarking data sequences in units of distribution processing with respect to the clients, and sends the generated blocks to the clients through the communication unit.

8. The information processing apparatus (10; 320; 520) according to Claim 1,
wherein the data processing unit (601) executes processing of generating management information making a correspondence relationship between the unique ID and information for specifying the client, and recording the generated management information in a storage unit,
wherein the data processing unit (601) analyzes a unique watermarking data sequence included in content, obtains the unique ID, and specifies a client as a content distribution destination based on the management information, and
wherein the data processing unit (601) analyzes a unique watermarking data sequence included in content, executes error correction processing with the error correction code included in the unique watermarking data sequence, and further verifies the presence of falsification in the unique ID included in the watermarking data sequence based on the falsification verification value included in the unique watermarking data sequence.

9. An information recording medium (301) which records therein:
content (310) which is constituent data of content to be reproduced in an information processing apparatus from which selected data parts are missing; and
a program (318) to be applied for executing data obtaining processing for the missing data parts of the content,
wherein the information processing apparatus (350) to which the information recording medium (301) is attached is made to execute the program (318), the information processing apparatus (350) being thereby adapted:
to perform processing of sending user information and an identifier of the information recording medium or a content ID to a server (320), the server being adapted
to generate watermarked content by repeatedly selecting and arranging, in accordance with a generated unique watermarking data sequence, data blocks of the content which have been embedded with watermarking data, the unique watermarking data sequence including a unique identifier, a falsification verification value that is operable to provide an indication of falsification of the unique identifier and an error correction code;
to calculate the falsification verification value with respect to the unique identifier and calculate the error correction code with respect to the combined data of the unique identifier and the falsification verification value; and
to generate management information for making a correspondence between the unique identifier and information for specifying the user; and to provide data blocks based on user information and the identifier of the recording medium or the content ID,
to obtain data blocks (322, 321) of the missing data parts from the server (320), the data blocks each incorporating the watermarking data and
to generate reproduction content (360).

10. The information recording medium (301) according to Claim 9,
wherein the program (318) includes reproduction control information for executing reproduction processing by combining content with the missing data parts and the data blocks for the missing data parts, in each of which watermarking data is recorded, such that the information processing apparatus executes reproduction processing of reproduction content to which the reproduction control information is applied.

11. An information processing apparatus (20; 350; 550) comprising:
a data processing unit (701) which executes content reproduction processing,
wherein the data processing unit (701) performs content reproduction processing by combining content from which selected data parts are missing (311; 511) and watermarked data blocks which correspond to the missing data parts, the watermarked data blocks being obtained from a server (320; 520), the server being adapted
to generate watermarked content by repeatedly selecting and arranging, in accordance with a generated unique watermarking data sequence, data blocks of the content which have been embedded with watermarking data, the unique watermarking data sequence including a unique identifier, a falsification verification value that is operable to provide an indication of falsification of the unique identifier and an error correction code; and
to calculate the falsification verification value with respect to the unique identifier and calculate the error correction code with respect to the combined data of the unique identifier and the falsification verification value; and
by individually and sequentially reading a stream file including reproduction data of the content with the missing data parts and a stream file including the watermarked data block based on reproduction section designating information for play items set in a playlist file as a reproduction control information file.

12. An information processing method executed in an information processing apparatus (10; 320; 520), comprising:
performing data processing by a data processing unit (601) generating content to be distributed to clients (20, 21, 22; 350; 550); and
communicating by a communication unit (609) sending the content generated in the data processing unit (601),
wherein the data processing includes:
generating a plurality of watermarked record blocks by embedding watermarking data in blocks of original content, each block having a section of data; and
generating a unique watermarking data sequence, wherein the unique watermarking data sequence is a data sequence including:
a unique identifier corresponding to each distribution processing with respect to the client,
a falsification verification value, and
an error correction code,
generating watermarked content by repeatedly selecting and arranging watermarked record blocks in accordance with the unique watermarking data sequence, wherein the falsification verification value is calculated with respect to the unique identifier, the falsification verification value being operable to provide an indication of falsification of the unique identifier, and the error correction code is calculated with respect to the combined data of the unique identifier and the falsification verification value.

13. A computer-implemented program which causes an information processing apparatus (10; 320; 520) to execute information processing comprising:
performing data processing by causing a data processing unit (601) to generate content to be distributed to clients (20, 21, 22; 350; 550); and
communicating by causing a communication unit (609) to send the content generated in the data processing unit (601),
wherein the data processing includes:
generating a plurality of watermarked record blocks by embedding watermarking data in blocks of original content, each block having a section of data;
generating a unique watermarking data sequence, wherein the unique watermarking data sequence is a data sequence including:
a unique identifier corresponding to each distribution processing with respect to the client,
a falsification verification value, and
an error correction code; and
generating watermarked content by repeatedly selecting and arranging watermarked record blocks in accordance with the unique watermarking data sequence, wherein the falsification verification value is calculated with respect to the unique identifier, the falsification verification value being operable to provide an indication of falsification of the unique identifier, and the error correction code is calculated with respect to the combined data of the unique identifier and the falsification verification value.

14. An information processing method executed in an information processing apparatus (20; 350; 550) comprising:
performing data processing by a data processing unit (701) executing content reproduction processing,
wherein in the data processing, content reproduction processing is performed by combining content from which selected data parts are missing (311; 511) and watermarked record blocks which correspond to the missing data parts, the watermarked record blocks being obtained from a server (320; 520), the server being adapted
to generate watermarked content by repeatedly selecting and arranging, in accordance with a generated unique watermarking data sequence, data blocks of the content which have been embedded with watermarking data, the unique watermarking data sequence including a unique identifier, a falsification verification value that is operable to provide an indication of falsification of the unique identifier and an error correction code; and
to calculate the falsification verification value with respect to the unique identifier and calculate the error correction code with respect to the combined data of the unique identifier and the falsification verification value, and
by individually and sequentially reading a stream file including reproduction data of content with the missing data parts and a stream file including the watermarked record block based on reproduction section designating information for play items set in a playlist file as a reproduction control information file.

15. A computer-implemented program which causes an information processing apparatus (20; 350; 550) to execute information processing comprising:
performing data processing by a data processing unit (701) executing content reproduction processing,
wherein in the data processing, content reproduction processing is performed by combining content from which selected data parts are missing (311; 511) and watermarked record blocks which correspond to the missing data parts, the watermarked record blocks being obtained from a server (320; 520), the server being adapted
to generate watermarked content by repeatedly selecting and arranging, in accordance with a generated unique watermarking data sequence, data blocks of the content which have been embedded with watermarking data, the unique watermarking data sequence including a unique identifier, a falsification verification value that is operable to provide an indication of falsification of the unique identifier and an error correction code; and
to calculate the falsification verification value with respect to the unique identifier and calculate the error correction code with respect to the combined data of the unique identifier and the falsification verification value, and by
individually and sequentially reading a stream file including reproduction data of content with the missing data parts and a stream file including the watermarked record block based on reproduction section designating information for play items set in a playlist file as a reproduction control information file.

## Patentansprüche

1. Informationsverarbeitungsvorrichtung (10; 320; 520), die Folgendes umfasst:
eine Datenverarbeitungseinheit (601), die zu einem Client (20, 21, 22; 350; 550) zu verteilenden Inhalt generiert; und
eine Kommunikationseinheit (609), die den durch die Datenverarbeitungseinheit (601) generierten Inhalt sendet,
wobei die Datenverarbeitungseinheit (601): mehrere mit Wasserzeichen versehene Aufzeichnungsblöcke generiert durch Einbetten von mit Wasserzeichen versehenden Daten in Blöcke des ursprünglichen Inhalts, wobei jeder Block ein Abschnitt von Daten ist;
eine eindeutige, mit Wasserzeichen versehende Datensequenz generiert, wobei die eindeutige, mit Wasserzeichen versehene Datensequenz eine Datensequenz ist, die Folgendes enthält:
eine eindeutige Kennung entsprechend jeder Verteilungsverarbeitung bezüglich des Clients,
einen Falsifizierungs-Verifizierungswert und
einen Fehlerkorrekturcode;
einen mit Wasserzeichen versehenen Inhalt generiert durch wiederholtes Wählen und Anordnen der mit Wasserzeichen versehenen Aufzeichnungsblöcke gemäß der eindeutigen, mit Wasserzeichen versehenden Datensequenz und
den generierten, mit Wasserzeichen versehenen Inhalt durch die Kommunikationseinheit an den Client sendet,
wobei die Datenverarbeitungseinheit (601) ausgelegt ist zum Berechnen des Falsifizierungs-Verifizierungswerts bezüglich der eindeutigen Kennung, wobei der Falsifizierungs-Verifizierungswert dahingehend arbeiten kann, eine Anzeige einer Falsifizierung der eindeutigen Kennung zu liefern, und zum Berechnen des Fehlerkorrekturcodes bezüglich der kombinierten Daten der eindeutigen Kennung und des Falsifizierungs-Verifizierungswerts.

2. Informationsverarbeitungsvorrichtung (10; 320; 520) nach Anspruch 1,
wobei die Datenverarbeitungseinheit (601) Inhalt unterteilt, ohne Aufzeichnungsblöcke mit Wasserzeichen zu versehen eine Mehrzahl von verschiedenen, mit Wasserzeichen versehenden Aufzeichnungsinhaltitems generiert, bei denen verschiedene mit Wasserzeichen versehende Daten in jeden Block eingebettet sind, und Inhalt generiert, bei dem verschiedene eindeutige mit Wasserzeichen versehende Datensequenzen in Einheiten von Verteilungsverarbeitung bezüglich der Clients eingestellt werden durch Auswählen und Anordnen verschiedener Kombinationen von Blöcken unter der Mehrzahl von verschiedenen, mit Wasserzeichen versehenden Aufzeichnungsinhaltitems in Einheiten der Verteilungsverarbeitung bezüglich der Clients.

3. Informationsverarbeitungsvorrichtung (10; 320; 520) nach Anspruch 1,
wobei der Falsifizierungs-Verifizierungswert ein MAC-Wert (Message Authentication Code) ist.

4. Informationsverarbeitungsvorrichtung (10; 320; 520) nach Anspruch 1 oder 3, wobei der Fehlerkorrekturcode ein Reed-Solomon Code ist.

5. Informationsverarbeitungsvorrichtung (10; 320; 520) nach Anspruch 1,
wobei die Datenverarbeitungseinheit (601) jeden Block als Abschnittsdaten des Inhalts als eine individuelle Streamdatei einstellt, die durch ein in einer Playlist-Datei als Reproduktionssteuerinformationsdatei eingestelltes Play-Item bezeichnet ist.

6. Informationsverarbeitungsvorrichtung (10; 320; 520) nach Anspruch 5,
wobei die Datenverarbeitungseinheit (601) die gemeinsame Playlist-Datei an die Clients liefert, an die Inhalt mit unterschiedlich eingestellten eindeutigen, mit Wasserzeichen versehenden Datensequenzen geliefert worden ist.

7. Informationsverarbeitungsvorrichtung (10; 320; 520) nach Anspruch 1,
wobei die Datenverarbeitungseinheit (601) an den Client nur eine Mehrzahl von Blöcken liefert, die einen Teil eines Reproduktionsinhalts im Client darstellt, eine Mehrzahl von Blöcken mit unterschiedlich eingestellten eindeutigen, mit Wasserzeichen versehenden Datensequenzen in Einheiten der Verteilungsverarbeitung bezüglich der Clients generiert und die generierten Blöcke durch die Kommunikationseinheit an die Clients sendet.

8. Informationsverarbeitungsvorrichtung (10; 320; 520) nach Anspruch 1,
wobei die Datenverarbeitungseinheit (601) die Verarbeitung des Generierens von Managementinformationen, eine Entsprechungsbeziehung zwischen der eindeutigen ID und Informationen zum Spezifizieren des Client anstellend, und des Aufzeichnens der generierten Managementinformationen in einer Ablageeinheit ausführt,
wobei die Datenverarbeitungseinheit (601) eine im Inhalt enthaltene eindeutige, mit Wasserzeichen versehende Datensequenz analysiert, die eindeutige ID erhält und einen Client als Inhaltsverteilungsziel auf der Basis der Managementinformationen spezifiziert, und
wobei die Datenverarbeitungseinheit (601) eine im Inhalt enthaltene eindeutige, mit Wasserzeichen versehende Datensequenz analysiert, eine Fehlerkorrekturverarbeitung mit dem in der eindeutigen, mit Wasserzeichen versehenden Datensequenz enthaltenen Fehlerkorrekturcode ausführt und weiterhin die Anwesenheit der Falsifizierung in der mit Wasserzeichen versehenden Datensequenz enthaltenen eindeutigen ID verifiziert auf der Basis des in der eindeutigen, mit Wasserzeichen versehenden Datensequenz enthaltenen Falsifizierungs-Verifizierungswerts.

9. Informationsaufzeichnungsmedium (301), das darin Folgendes aufzeichnet:
Inhalt (310), bei dem es sich um Bestandteilsdaten von Inhalt handelt, der in einer Informationsverarbeitungsvorrichtung reproduziert werden soll, woraus ausgewählte Datenteile fehlen; und
ein Programm (318) zur Anwendung zum Ausführen einer Datenerhaltungsverarbeitung für die fehlenden Datenteile des Inhalts,
wobei die Informationsverarbeitungsvorrichtung (350), an die das Informationsaufzeichnungsmedium (301) angeschlossen ist, veranlasst wird, das Programm (318) auszuführen, wobei die Informationsverarbeitungsvorrichtung (350) dadurch ausgelegt ist zum:
Durchführen einer Verarbeitung des Sendens von Benutzerinformationen und einer Kennung des Informationsaufzeichnungsmediums oder einer Inhalts-ID an einen Server (320), wobei der Server ausgelegt ist zum
Generieren von mit Wasserzeichen versehenem Inhalt durch wiederholtes Wählen und Anordnen, gemäß einer generierten eindeutigen, mit Wasserzeichen versehenden Datensequenz, von Datenblöcken des Inhalts, in die mit Wasserzeichen versehende Daten eingebettet worden sind, wobei die eindeutige, mit Wasserzeichen versehende Datensequenz eine eindeutige Kennung, einen Falsifizierungs-Verifizierungswert, der arbeiten kann zum Liefern einer Anzeige einer Falsifizierung der eindeutigen Kennung und eines Fehlerkorrekturcodes, enthält;
Berechnen des Falsifizierungs-Verifizierungswerts bezüglich der eindeutigen Kennung und Berechnen des Fehlerkorrekturcodes bezüglich der kombinierten Daten der eindeutigen Kennung und des Falsifizierungs-Verifizierungswerts; und
Generieren von Managementinformationen zum Herstellen einer Entsprechung zwischen der eindeutigen Kennung und Informationen zum Spezifizieren des Benutzers; und zum Liefern von Datenblöcken auf der Basis von Benutzerinformationen und der Kennung des Aufzeichnungsmediums oder der Inhalts-ID,
Erhalten von Datenblöcken (322, 321) der fehlenden Datenteile von dem Server (320), wobei die Datenblöcke jeweils die mit Wasserzeichen versehenden Daten enthalten, und
Generieren eines Reproduktionsinhalts (360).

10. Informationsaufzeichnungsmedium (301) nach Anspruch 9,
wobei das Programm (318) Reproduktionssteuerinformationen zum Ausführen einer Reproduktionsverarbeitung durch Kombinieren von Inhalt mit den fehlenden Datenteilen und den Datenblöcken für die fehlenden Datenteile enthält, worin jeweils mit Wasserzeichen versehende Daten aufgezeichnet sind, so dass die Informationsverarbeitungsvorrichtung eine Reproduktionsverarbeitung von Reproduktionsinhalt, auf dem die Reproduktionssteuerinformationen angewendet werden, ausführt.

11. Informationsverarbeitungsvorrichtung (20; 350; 550), die Folgendes umfasst:
eine Datenverarbeitungseinheit (701), die eine Inhaltsreproduktionsverarbeitung ausführt,
wobei die Datenverarbeitungseinheit (701) eine Inhaltsreproduktionsverarbeitung durchführt durch Kombinieren von Inhalt, in dem ausgewählte Datenteile fehlen (311; 511) und mit Wasserzeichen versehenen Datenblöcken, die den fehlenden Datenteilen entsprechen, wobei die mit Wasserzeichen versehenen Datenblöcke von einem Server (320; 520) erhalten werden, wobei der Server ausgelegt ist zum
Generieren von mit Wasserzeichen versehenem Inhalt durch wiederholtes Wählen und Anordnen, gemäß einer generierten eindeutigen, mit Wasserzeichen versehenden Datensequenz, von Datenblöcken des Inhalts, in die mit Wasserzeichen versehende Daten eingebettet worden sind, wobei die eindeutige, mit Wasserzeichen versehende Datensequenz eine eindeutige Kennung, einen Falsifizierungs-Verifizierungswert, der arbeiten kann zum Liefern einer Anzeige einer Falsifizierung der eindeutigen Kennung und eines Fehlerkorrekturcodes, enthält; und
Berechnen des Falsifizierungs-Verifizierungswerts bezüglich der eindeutigen Kennung und Berechnen des Fehlerkorrekturcodes bezüglich der kombinierten Daten der eindeutigen Kennung und des Falsifizierungs-Verifizierungswerts; und
durch individuelles und sequenzielles Lesen einer Streamdatei, die Reproduktionsdaten des Inhalts mit den fehlenden Datenteilen enthält, und einer Streamdatei, die den mit Wasserzeichen versehenen Datenblock enthält, auf der Basis von Reproduktionsabschnittbezeichnungsinformationen für in einer Playlist-Datei als eine Reproduktionssteuerinformationsdatei eingestellte Play-Items.

12. Informationsverarbeitungsverfahren, in einer Informationsverarbeitungsvorrichtung (10; 320; 520) ausgeführt, das Folgendes umfasst:
Durchführen einer Datenverarbeitung durch eine Datenverarbeitungseinheit (601), die einen Inhalt generiert, der an Clients (20, 21, 22; 350; 550) verteilt werden soll; und
Kommunizieren durch eine Kommunikationseinheit (609), die den in der Datenverarbeitungseinheit (601) generierten Inhalt sendet,
wobei die Datenverarbeitung Folgendes beinhaltet:
Generieren einer Mehrzahl von mit Wasserzeichen versehenen Aufzeichnungsblöcken durch Einbetten von mit Wasserzeichen versehenden Daten in Blöcke von ursprünglichem Inhalt, wobei jeder Block einen Abschnitt von Daten aufweist; und
Generieren einer eindeutigen, mit Wasserzeichen versehenden Datensequenz, wobei die eindeutige, mit Wasserzeichen versehende Datensequenz eine Datensequenz ist, die Folgendes enthält:
eine eindeutige Kennung entsprechend jeder Verteilungsverarbeitung bezüglich des Clients,
einen Falsifizierungs-Verifizierungswert und
einen Fehlerkorrekturcode;
Generieren eines mit Wasserzeichen versehenen Inhalts durch wiederholtes Auswählen und Anordnen von mit Wasserzeichen versehenen Aufzeichnungsblöcken gemäß der eindeutigen, mit Wasserzeichen versehenden Datensequenz, wobei der Falsifizierungs-Verifizierungswert bezüglich der eindeutigen Kennung berechnet wird, wobei der Falsifizierungs-Verifizierungswert dahingehend arbeiten kann, eine Anzeige einer Falsifizierung der eindeutigen Kennung zu liefern, und der Fehlerkorrekturcode bezüglich der kombinierten Daten der eindeutigen Kennung und des Falsifizierungs-Verifizierungswerts berechnet wird.

13. Computerimplementiertes Programm, das bewirkt, dass eine Informationsverarbeitungsvorrichtung (10; 320; 520) eine Informationsverarbeitung ausführt, umfassend:
Durchführen einer Datenverarbeitung durch Bewirken, dass eine Datenverarbeitungseinheit (601) einen Inhalt generiert, der zu Clients (20, 21, 22; 350; 550) verteilt werden soll; und
Kommunizieren durch Bewirken, dass eine Kommunikationseinheit (609) den in der Datenverarbeitungseinheit (601) generierten Inhalt sendet,
wobei die Datenverarbeitung Folgendes beinhaltet:
Generieren einer Mehrzahl von mit Wasserzeichen versehenen Aufzeichnungsblöcken durch Einbetten von mit Wasserzeichen versehenden Daten in Blöcke von ursprünglichem Inhalt, wobei jeder Block einen Abschnitt von Daten aufweist;
Generieren einer eindeutigen, mit Wasserzeichen versehenden Datensequenz, wobei die eindeutige, mit Wasserzeichen versehende Datensequenz eine Datensequenz ist, die Folgendes enthält:
eine eindeutige Kennung entsprechend jeder Verteilungsverarbeitung bezüglich des Clients,
einen Falsifizierungs-Verifizierungswert und
einen Fehlerkorrekturcode; und
Generieren eines mit Wasserzeichen versehenen Inhalts durch wiederholtes Auswählen und Anordnen von mit Wasserzeichen versehenen Aufzeichnungsblöcken gemäß der eindeutigen, mit Wasserzeichen versehenden Datensequenz, wobei der Falsifizierungs-Verifizierungswert bezüglich der eindeutigen Kennung berechnet wird, wobei der Falsifizierungs-Verifizierungswert dahingehend arbeiten kann, eine Anzeige einer Falsifizierung der eindeutigen Kennung zu liefern, und der Fehlerkorrekturcode bezüglich der kombinierten Daten der eindeutigen Kennung und des Falsifizierungs-Verifizierungswerts berechnet wird.

14. Informationsverarbeitungsverfahren, in einer Informationsverarbeitungsvorrichtung (20; 350; 550) ausgeführt, das Folgendes umfasst:
Durchführen einer Datenverarbeitung durch eine Datenverarbeitungseinheit (701), die eine Inhaltsreproduktionsverarbeitung ausführt,
wobei bei der Datenverarbeitung eine Inhaltsreproduktionsverarbeitung durchgeführt wird durch Kombinieren von Inhalt, in dem ausgewählte Datenteile fehlen (311; 511), und mit Wasserzeichen versehenen Aufzeichnungsblöcken, die den fehlenden Datenteilen entsprechen, wobei die mit Wasserzeichen versehenen Aufzeichnungsblöcke von einem Server (320, 520) erhalten werden, wobei der Server ausgelegt ist zum:
Generieren von mit Wasserzeichen versehenem Inhalt durch wiederholtes Wählen und Anordnen, gemäß einer generierten eindeutigen, mit Wasserzeichen versehenden Datensequenz, von Datenblöcken des Inhalts, in die mit Wasserzeichen versehende Daten eingebettet worden sind, wobei die eindeutige, mit Wasserzeichen versehende Datensequenz eine eindeutige Kennung, einen Falsifizierungs-Verifizierungswert, der arbeiten kann zum Liefern einer Anzeige einer Falsifizierung der eindeutigen Kennung und eines Fehlerkorrekturcodes, enthält; und
Berechnen des Falsifizierungs-Verifizierungswerts bezüglich der eindeutigen Kennung und Berechnen des Fehlerkorrekturcodes bezüglich der kombinierten Daten der eindeutigen Kennung und des Falsifizierungs-Verifizierungswerts; und
durch individuelles und sequenzielles Lesen einer Streamdatei, die Reproduktionsdaten des Inhalts mit den fehlenden Datenteilen enthält, und einer Streamdatei, die den mit Wasserzeichen versehenen Aufzeichnungsblock enthält, auf der Basis von Reproduktionsabschnittbezeichnungsinformationen für in einer Playlist-Datei als eine Reproduktionssteuerinformationsdatei eingestellten Play-Items.

15. Computerimplementiertes Programm, das bewirkt, das eine Informationsverarbeitungsvorrichtung (20; 350; 550) eine Informationsverarbeitung ausführt, umfassend:
Durchführen einer Datenverarbeitung durch eine Datenverarbeitungseinheit (701), die eine Inhaltsreproduktionsverarbeitung ausführt,
wobei bei der Datenverarbeitung eine Inhaltsreproduktionsverarbeitung durchgeführt wird durch Kombinieren von Inhalt, in dem ausgewählte Datenteile fehlen (311; 511), und mit Wasserzeichen versehenen Aufzeichnungsblöcken, die den fehlenden Datenteilen entsprechen, wobei die mit Wasserzeichen versehenen Aufzeichnungsblöcke von einem Server (320, 520) erhalten werden, wobei der Server ausgelegt ist zum:
Generieren von mit Wasserzeichen versehenem Inhalt durch wiederholtes Wählen und Anordnen, gemäß einer generierten eindeutigen, mit Wasserzeichen versehenden Datensequenz, von Datenblöcken des Inhalts, in die mit Wasserzeichen versehende Daten eingebettet worden sind, wobei die eindeutige, mit Wasserzeichen versehende Datensequenz eine eindeutige Kennung, einen Falsifizierungs-Verifizierungswert, der arbeiten kann zum Liefern einer Anzeige einer Falsifizierung der eindeutigen Kennung und eines Fehlerkorrekturcodes, enthält; und
Berechnen des Falsifizierungs-Verifizierungswerts bezüglich der eindeutigen Kennung und Berechnen des Fehlerkorrekturcodes bezüglich der kombinierten Daten der eindeutigen Kennung und des Falsifizierungs-Verifizierungswerts; und durch
individuelles und sequenzielles Lesen einer Streamdatei, die Reproduktionsdaten des Inhalts mit den fehlenden Datenteilen enthält, und eine Streamdatei, die den mit Wasserzeichen versehenen Aufzeichnungsblock enthält, auf der Basis von Reproduktionsabschnittbezeichnungsinformationen für in einer Playlist-Datei als eine Reproduktionssteuerinformationsdatei eingestellten Play-Items.

## Revendications

1. Appareil de traitement d'informations (10 ; 320 ; 520) comprenant :
une unité de traitement de données (601) qui génère un contenu à distribuer à un client (20, 21, 22 ; 350 ; 550) ; et
une unité de communication (609) qui envoie le contenu généré par l'unité de traitement de données (601),
où l'unité de traitement de données (601) :
génère une pluralité de blocs d'enregistrement filigranés en intégrant des données de filigrane dans des blocs de contenu original, chaque bloc étant une section de données ;
génère une séquence de données de filigrane unique, où la séquence de données de filigrane unique est une séquence de données comprenant :
un identifiant unique correspondant à chaque traitement de distribution par rapport au client,
une valeur de vérification de falsification, et
un code de correction d'erreur ;
génère un contenu filigrané en sélectionnant et en organisant de manière répétée les blocs d'enregistrement filigranés conformément à la séquence de données de filigrane unique, et
envoie le contenu filigrané généré au client par l'intermédiaire de l'unité de communication,
où l'unité de traitement de données (601) est conçue pour calculer la valeur de vérification de falsification par rapport à l'identifiant unique,
la valeur de vérification de falsification étant utilisable pour fournir une indication de falsification de l'identifiant unique, et pour calculer le code de correction d'erreur par rapport aux données combinées de l'identifiant unique et de la valeur de vérification de falsification.

2. Appareil de traitement d'informations (10 ; 320 ; 520) selon la revendication 1,
dans lequel l'unité de traitement de données (601) divise un contenu sans filigraner les blocs d'enregistrement, génère une pluralité d'éléments de contenu d'enregistrement de filigranage différents dans lesquels différentes données de filigranage sont intégrées dans chaque bloc, et génère un contenu dans lequel différentes séquences de données de filigranage uniques sont définies en unités de traitement de distribution par rapport aux clients en sélectionnant et organisant différentes combinaisons de blocs parmi la pluralité d'éléments de contenu d'enregistrement de filigranage différents en unités de traitement de distribution par rapport aux clients.

3. Appareil de traitement d'informations (10 ; 320 ; 520) selon la revendication 1,
dans lequel la valeur de vérification de falsification est une valeur de code d'authentification de message, MAC.

4. Appareil de traitement d'informations (10 ; 320 ; 520) selon la revendication 1 ou la revendication 3,
dans lequel le code de correction d'erreur est un code Reed-Solomon.

5. Appareil de traitement d'informations (10 ; 320 ; 520) selon la revendication 1,
dans lequel l'unité de traitement de données (601) défini chaque bloc comme données de section du contenu, comme un fichier de flux individuel désigné par des éléments de lecture définis dans un ficher de liste de lecture, comme ficher d'informations de contrôle de reproduction.

6. Appareil de traitement d'informations (10 ; 320 ; 520) selon la revendication 5,
dans lequel l'unité de traitement de données (601) fournit le ficher de listes de lecture commun aux clients auxquels un contenu ayant des séquences de données de filigranage uniques définies différemment a été fourni.

7. Appareil de traitement d'informations (10 ; 320 ; 520) selon la revendication 1,
dans lequel l'unité de traitement de données (601) fournit au client seulement une pluralité de blocs constituant une partie d'un contenu de reproduction dans le client, génère une pluralité de blocs ayant des séquences de données de filigranage uniques définies différemment en unités de traitement de distribution par rapport aux clients, et envoie les blocs générés aux clients par l'intermédiaire de l'unité de communication.

8. Appareil de traitement d'informations (10 ; 320 ; 520) selon la revendication 1,
dans lequel l'unité de traitement de données (601) exécute un traitement de génération d'informations de gestion créant une relation de correspondance entre l'ID unique et des informations pour spécifier le client, et enregistrer les informations de gestion générées dans une unité de stockage,
dans lequel l'unité de traitement de données (601) analyse une séquence de données de filigranage unique comprise dans un contenu, obtient l'ID unique, et spécifie un client comme destination de distribution de contenu sur la base des informations de gestion, et
dans lequel l'unité de traitement de données (601) analyse une séquence de données de filigranage unique comprise dans un contenu, exécute un traitement de correction d'erreur avec le code de correction d'erreur compris dans la séquence de données de filigranage unique, et vérifie en outre la présence de falsification dans l'ID unique compris dans la séquence de données de filigranage sur la base de la valeur de vérification de falsification comprise dans la séquence de données de filigranage unique.

9. Support d'enregistrement d'informations (301) sur lequel est enregistré :
un contenu (310) qui se composant de données constituantes de contenu à reproduire dans un appareil de traitement d'informations duquel des parties de données sélectionnées sont manquantes ;
et
un programme (318) à appliquer pour exécuter un traitement d'obtention de données pour les parties de données manquantes du contenu,
où l'appareil de traitement d'informations (350) auquel le support d'enregistrement d'informations (301) est lié est conçu pour exécuter le programme (318), l'appareil de traitement d'informations (350) étant ainsi conçu :
pour exécuter un traitement d'envoi d'informations d'utilisateur et un identifiant du support d'enregistrement d'informations ou un ID de contenu à un serveur (320), le serveur étant conçu :
pour générer un contenu filigrané en sélectionnant et organisant de manière répétée, conformément à une séquence de données de filigranage unique générée, des blocs de données du contenu qui ont été intégrés aux données de filigranage, la séquence de données de filigranage unique comprenant un identifiant unique, une valeur de vérification de falsification qui est utilisable pour fournir une indication de falsification de l'identifiant unique et un code de correction d'erreur ;
pour calculer la valeur de vérification de falsification par rapport à l'identifiant unique et calculer le code de correction d'erreur par rapport aux données combinées de l'identifiant unique et de la valeur de vérification de falsification ; et
pour générer des informations de gestion pour créer une correspondance entre l'identifiant unique et des informations pour spécifier l'utilisateur ; et pour fournir des blocs de données sur la base des informations d'utilisateur et l'identifiant du support d'enregistrement ou de l'ID de contenu,
pour obtenir des blocs de données (322, 321) des parties de données manquantes depuis le serveur (320), les blocs de données incorporant chacun les données de filigranage et
pour générer un contenu de reproduction (360).

10. Support d'enregistrement d'informations (301) selon la revendication 9,
dans lequel le programme (318) comprend des informations de contrôle de reproduction pour exécuter un traitement de reproduction en combinant un contenu avec les parties de données manquantes et les blocs de données pour les parties de données manquantes, dans chacune desquelles des données de filigranage sont enregistrées, de manière à ce que l'appareil de traitement d'informations exécute un traitement de reproduction de contenu de reproduction auquel les informations de contrôle de reproduction sont appliquées.

11. Appareil de traitement d'informations (20 ; 350 ; 550) comprenant :
une unité de traitement de données (701) qui exécute un traitement de reproduction de contenu,
dans lequel l'unité de traitement de données (701) exécute un traitement de reproduction de contenu en combinant un contenu duquel des parties de données sélectionnées sont manquantes (311 ; 511) et des blocs de données filigranés qui correspondent aux parties de données manquantes,
les blocs de données filigranés étant obtenus à partir d'un serveur (320 ; 520), le serveur étant conçu :
pour générer un contenu filigrané en sélectionnant et organisant de manière répétée, conformément à une séquence de données de filigranage unique générée, des blocs de données du contenu qui ont été intégrés aux données de filigranage, la séquence de données de filigranage unique comprenant un identifiant unique, une valeur de vérification de falsification qui est utilisable pour fournir une indication de falsification de l'identifiant unique et un code de correction d'erreur ; et
pour calculer la valeur de vérification de falsification par rapport à l'identifiant unique et calculer le code de correction d'erreur par rapport aux données combinées de l'identifiant unique et de la valeur de vérification de falsification ; et
en lisant, individuellement et séquentiellement, un ficher de flux comprenant des données de reproduction du contenu avec les parties de données manquantes et un fichier de flux comprenant le bloc de données filigrané basé sur une section de reproduction désignant des informations pour des éléments de lecture définis dans un ficher de liste de lecture comme fichier d'informations de contrôle de reproduction.

12. Procédé de traitement d'informations exécuté dans un appareil de traitement d'informations (10 ; 320 ; 520), comprenant les étapes suivantes :
exécuter un traitement de données par une unité de traitement de données (601) générant un contenu à distribuer aux clients (20, 21, 22 ; 350 ; 550) ;
et
communiquer par une unité de communication (609) en envoyant le contenu généré dans l'unité de traitement de données (601),
où le traitement de données comprend les étapes suivantes :
générer une pluralité de blocs d'enregistrement filigranés en intégrant des données de filigranage dans des blocs d'un contenu original, chaque bloc ayant une section de données ; et
générer une séquence de données de filigranage unique, où la séquence de données de filigranage unique est une séquence de données comprenant :
un identifiant unique correspondant à chaque traitement de distribution par rapport au client,
une valeur de vérification de falsification, et
un code de correction d'erreur ;
générer un contenu filigrané en sélectionnant et en organisant de manière répétée les blocs d'enregistrement filigranés conformément à la séquence de données de filigranage unique, où la valeur de vérification de falsification est calculée par rapport à l'identifiant unique, la valeur de vérification de falsification étant utilisable pour fournir une indication de falsification de l'identifiant unique, et le code de correction d'erreur est calculé par rapport aux données combinées de l'identifiant unique et de la valeur de vérification de falsification.

13. Programme mis en oeuvre par ordinateur qui amène un appareil de traitement d'informations (10 ; 320 ; 520) à exécuter un traitement d'informations comprenant les étapes suivantes :
exécuter un traitement de données en amenant l'unité de traitement de données (601) à générer un contenu à distribuer aux clients (20, 21, 22 ; 350 ; 550) ; et
communiquer en amenant une unité de communication (609) à envoyer le contenu généré dans l'unité de traitement de données (601),
où le traitement de données comprend les étapes suivantes :
générer une pluralité de blocs d'enregistrement filigranés en intégrant des données de filigranage dans des blocs d'un contenu original, chaque bloc ayant une section de données ; et
générer une séquence de données de filigranage unique, où la séquence de données de filigranage unique est une séquence de données comprenant :
un identifiant unique correspondant à chaque traitement de distribution par rapport au client, une valeur de vérification de falsification, et
un code de correction d'erreur ; et
générer un contenu filigrané en sélectionnant et en organisant de manière répétée les blocs d'enregistrements filigranés conformément à la séquence de données de filigranage unique, où la valeur de vérification de falsification est calculée par rapport à l'identifiant unique, la valeur de vérification de falsification étant utilisable pour fournir une indication de falsification de l'identifiant unique, et le code de correction d'erreur est calculé par rapport aux données combinées de l'identifiant unique et de la valeur de vérification de falsification.

14. Procédé de traitement d'informations exécuté dans un appareil de traitement d'informations (20 ; 350 ; 550) comprenant les étapes suivantes :
exécuter un traitement de données par une unité de traitement de données (701) exécutant un traitement de reproduction de contenu,
où dans le traitement de données, un traitement de reproduction de contenu est exécuté en combinant un contenu duquel des parties de données sélectionnées sont manquantes (311 ; 511) et des blocs d'enregistrement filigranés qui correspondent aux parties de données manquantes,
les blocs d'enregistrement filigranés étant obtenus à partir d'un serveur (320 ; 520), le serveur étant conçu :
pour générer un contenu filigrané en sélectionnant et organisant de manière répétée, conformément à une séquence de données de filigranage unique générée, des blocs de données du contenu qui ont été intégrés aux données de filigranage, la séquence de données de filigranage unique comprenant un identifiant unique, une valeur de vérification de falsification qui est utilisable pour fournir une indication de falsification de l'identifiant unique et un code de correction d'erreur ; et
pour calculer la valeur de vérification de falsification par rapport à l'identifiant unique et calculer le code de correction d'erreur par rapport aux données combinées de l'identifiant unique et de la valeur de vérification de falsification ; et
en lisant, individuellement et séquentiellement, un ficher de flux comprenant des données de reproduction du contenu avec les parties de données manquantes et un fichier de flux comprenant le bloc d'enregistrement filigrané basé sur une section de reproduction désignant des informations pour des éléments de lecture définis dans un ficher de liste de diffusion comme fichier d'informations de contrôle de reproduction.

15. Programme mis en oeuvre par ordinateur qui amène un appareil de traitement d'informations (20 ; 350 ; 550) à exécuter un traitement d'informations comprenant les étapes suivantes :
exécuter un traitement de données par une unité de traitement de données (701) exécutant un traitement de reproduction de contenu,
où dans le traitement de données, un traitement de reproduction de contenu est exécuté en combinant un contenu duquel des parties de données sélectionnées sont manquantes (311 ; 511) et des blocs d'enregistrement filigranés qui correspondent aux parties de données manquantes,
les blocs d'enregistrement filigranés étant obtenus à partir d'un serveur (320 ; 520), le serveur étant conçu :
pour générer un contenu filigrané en sélectionnant et organisant de manière répétée, conformément à une séquence de données de filigranage unique générée, des blocs de données du contenu qui ont été intégrés aux données de filigranage, la séquence de données de filigranage unique comprenant un identifiant unique, une valeur de vérification de falsification qui est utilisable pour fournir une indication de falsification de l'identifiant unique et un code de correction d'erreur ; et
pour calculer la valeur de vérification de falsification par rapport à l'identifiant unique et calculer le code de correction d'erreur par rapport aux données combinées de l'identifiant unique et de la valeur de vérification de falsification ; et
en lisant, individuellement et séquentiellement, un ficher de flux comprenant des données de reproduction du contenu avec les parties de données manquantes et un fichier de flux comprenant le bloc d'enregistrement filigranés basé sur une section de reproduction désignant des informations pour des éléments de lecture définis dans un ficher de liste de diffusion comme fichier d'informations de contrôle de reproduction.
